# EUROPEAN PATENT SPECIFICATION

(11) **EP 3 079 288 B1**
(45) Date of publication and mention of the grant of the patent: **29.08.2018**
(21) Application number: 13900645.6
(22) Date of filing: 31.12.2013
(51) Int. Cl.: H04W 88/08, H04W 72/12, H04W 72/04

(54) **DATA TRANSMISSION METHOD, DATA FORWARDING DEVICE, AND SYSTEM**
DATENÜBERTRAGUNGSVERFAHREN, DATENWEITERLEITUNGSVORRICHTUNG UND SYSTEM
PROCÉDÉ DE TRANSMISSION DE DONNÉES, DISPOSITIF DE TRANSFERT DE DONNÉES ET SYSTÈME

(43) Date of publication of application: 12.10.2016
(73) Proprietor: Huawei Technologies Co., Ltd., Longgang District Shenzhen, Guangdong 518129 (CN)
(72) Inventor: LIU, Zhongquan, Shenzhen Guangdong 518129 (CN); FU, Weixiang, Shenzhen Guangdong 518129 (CN)
(74) Representative: Thun, Clemens
(86) International application number: PCT/CN2013/091049
(87) International publication number: WO 2015/100589

(56) References cited:
- EP-A1- 2 602 948
- WO-A1-2010/145187
- WO-A1-2013/057575
- CN-A- 101 248 689
- CN-A- 101 854 663
- US-A1- 2007 091 896

## Description

### TECHNICAL FIELD

Embodiments of the present invention relate to the communications field, and in particular, to a data transmission method, a data transfer device, and a system.

### BACKGROUND

In a wireless base station device, a baseband unit (Baseband Unit, BBU) and a remote radio unit (Remote Radio Unit, RRU) are connected by using a common public radio interface (Common Public Radio Interface, CPRI) port. A main feature of the CPRI port is separation between baseband and radio frequency.

Devices that use a CPRI port, such as a BBU and an RRU, may work in frequency division duplex (Frequency Division Duplex, FDD) mode and time division duplex (Time Division Duplex, TDD) mode. The CPRI port is a bidirectional full-duplex interface.

In a process of implementing the present invention, the inventor of the present invention finds that transmission bandwidth utilization of an existing CPRI port is low.

For example, US 2007/0091896A1 refers to a CPRI-based multiprotocol signal transmission method and apparatus in a distributed base station system.

### SUMMARY

The present invention provides a data transmission method and data transfer devices, so as to solve a problem of low transmission bandwidth utilization of an existing CPRI port.

The invention is set out in the appended set of claims. The embodiments and/or examples of the following description which are not covered by the appended claims are considered as not being part of the present invention.

According to a first aspect, the present invention provides a data transmission method, including:
receiving, by a first device by using a first Ethernet interface, packet data sent by a first packet handling switching PHS network device, and receiving, by using a first common public radio interface CPRI port, in-phase/quadrature I/Q data sent by a first unit, where a format of the I/Q data conforms to a CPRI protocol;
converting, by the first device, the packet data into conversion data whose format conforms to the CPRI protocol, wherein the conversion is performed by adding of a field to the packet data, wherein the field is encapsulated in order to conform to the CPRI protocol; and
carrying, by the first device, the conversion data and the I/Q data in transmission resources on a CPRI channel, and sending the conversion data and the I/Q data carried in the transmission resources to a second device, where
the first PHS network device is a PHS server device, and the first unit is a baseband unit BBU; or the first PHS network device is a PHS client device, and the first unit is a remote radio unit RRU.

With reference to the first aspect, in a first possible implementation manner of the first aspect, the packet data is data to be sent by the first packet handling switching PHS network device to a second PHS network device, and the I/Q data is data to be sent by the first unit to a second unit; and
the second device is configured to provide the packet data for the second PHS network device, and provide the I/Q data for the second unit, where a second Ethernet interface of the second device is connected to the second PHS network device, and a second CPRI port of the second device is connected to the second unit.

With reference to the first aspect or the first possible implementation manner of the first aspect, in a second possible implementation manner of the first aspect, when the first PHS network device is a PHS server device, the second PHS network device is a PHS client device, and the second unit is an RRU; or
when the first PHS network device is a PHS client device, the second PHS network device is a PHS server device, and the second unit is a BBU.

With reference to the first aspect or the first possible or the second possible implementation manner of the first aspect, in a third possible implementation manner of the first aspect, the carrying, by the first device, the conversion data and the I/Q data in transmission resources on a CPRI channel includes:
carrying, by the first device, the I/Q data in the transmission resources on the CPRI channel;
acquiring, by the first device in the transmission resources on the CPRI channel, an idle resource that is not occupied by the I/Q data; and
carrying, by the first device, the conversion data in the idle resource.

With reference to the first aspect or the first possible or the second possible implementation manner of the first aspect, in a fourth possible implementation manner of the first aspect, the carrying, by the first device, the conversion data and the I/Q data in transmission resources on a CPRI channel includes:
determining, by the first device in the transmission resources on the CPRI channel, a first transmission resource used to carry the I/Q data and a second transmission resource used to carry the conversion data; and
carrying, by the first device, the I/Q data in the first transmission resource, and carrying the conversion data in the second transmission resource.

With reference to the first aspect or any one of the first to the fourth possible implementation manners of the first aspect, in a fifth possible implementation manner of the first aspect, two ends of the CPRI channel are separately a third CPRI port of the first device and a fourth CPRI port of the second device, and the sending the conversion data and the I/Q data carried in the transmission resources to a second device includes:
sending the conversion data and the I/Q data carried in the transmission resources to the fourth CPRI port of the second device by using the third CPRI port of the first device.

According to a second aspect, an embodiment of the present invention further provides a data transfer device, where:
the data transfer device includes a transceiver and a processor, the data transfer device is connected to a second device by using a common public radio interface CPRI channel, the transceiver is connected to a first packet handling switching PHS network device by using a first Ethernet interface, and the transceiver is connected to a first unit by using a first CPRI port, where
the transceiver is configured to receive, by using the first Ethernet interface, packet data sent by the first PHS network device, and receive, by using the first CPRI port, in-phase/quadrature I/Q data sent by the first unit, where a format of the I/Q data conforms to a CPRI protocol;
the processor is configured to convert the packet data into conversion data whose format conforms to the CPRI protocol, wherein the conversion is performed by adding of a field to the packet data, wherein the field is encapsulated in order to conform to the CPRI protocol; and
the processor is further configured to carry the conversion data and the I/Q data in transmission resources on the CPRI channel, and send the conversion data and the I/Q data carried in the transmission resources to the second device by using the transceiver, where
the first PHS network device is a PHS server device, and the first unit is a baseband unit BBU; or the first PHS network device is a PHS client device, and the first unit is a remote radio unit RRU.

According to a third aspect, an embodiment of the present invention further provides another data transfer device, where:
the data transfer device includes a transceiver and a processor, the data transfer device is connected to a first device by using a common public radio interface CPRI channel, the transceiver is connected to a second packet handling switching PHS network device by using a second Ethernet interface, and the transceiver is connected to a second unit by using a second CPRI port, where
the transceiver is configured to receive, from the first device, conversion data and I/Q data that are carried in transmission resources on a common public radio interface CPRI channel, where a format of the conversion data and a format of the I/Q data both conform to a CPRI protocol, wherein the conversion data contain packet data together with a field added to the packet data, wherein the field is encapsulated in order to conform to the CPRI protocol;
the processor is configured to obtain packet data by parsing the conversion data; and
the transceiver is further configured to send the packet data to the second packet handling switching PHS network device by using the second Ethernet interface, and send the I/Q data to the second unit by using the second CPRI port, where
the second PHS network device is a PHS server device, and the second unit is a baseband unit BBU; or the second PHS network device is a PHS client device, and the second unit is a remote radio unit RRU.

As can be seen from the foregoing technical solutions, the embodiments of the present invention have the following advantages:
In the foregoing technical solutions, after being processed by a first device, packet data from a PHS network device and I/Q data from a BBU (or an RRU) can be carried in transmission resources on a CPRI channel and sent to a second device, and can be provided by the second device for another PHS network device and the RRU (or BBU) respectively. Therefore, the volume of data carried in the transmission resources on the CPRI channel increases, and resource utilization is improved, thereby solving a problem of low transmission bandwidth utilization of a CPRI port.

### BRIEF DESCRIPTION OF DRAWINGS

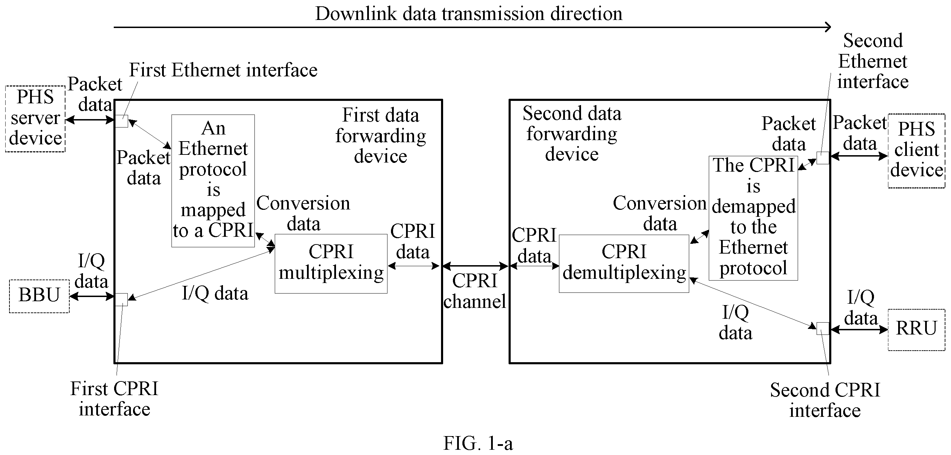

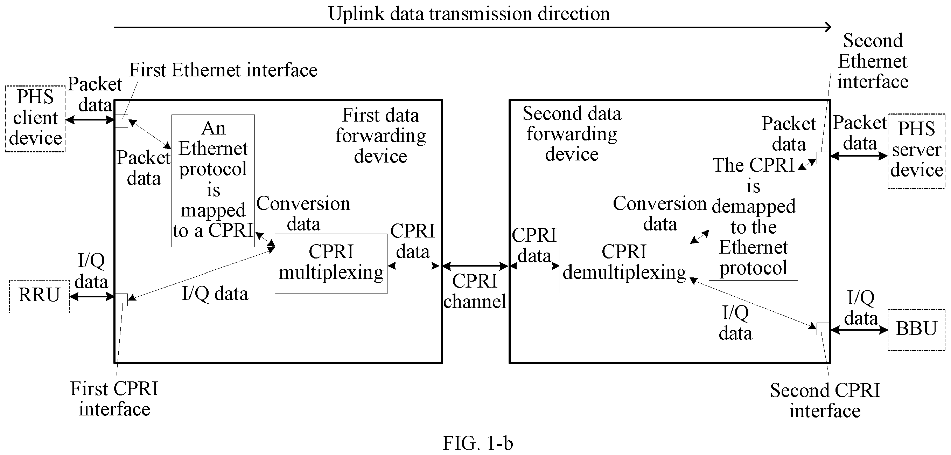

FIG. 1-a is a schematic flowchart of data processing in a data transmission method according to an embodiment of the present invention;
FIG. 1-b is a schematic flowchart of data processing in another data transmission method according to an embodiment of the present invention;
FIG. 2 is a schematic block flowchart of a data transmission method according to an embodiment of the present invention;
FIG. 3-a is a schematic diagram of an implementation manner in which transmission resources on a CPRI channel carry I/Q data according to an embodiment of the present invention;

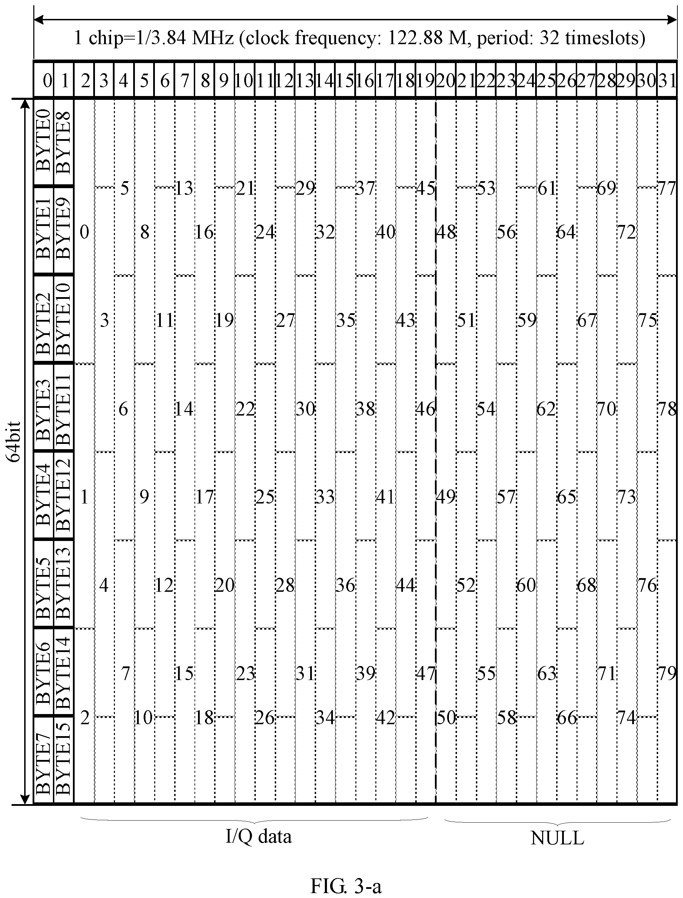

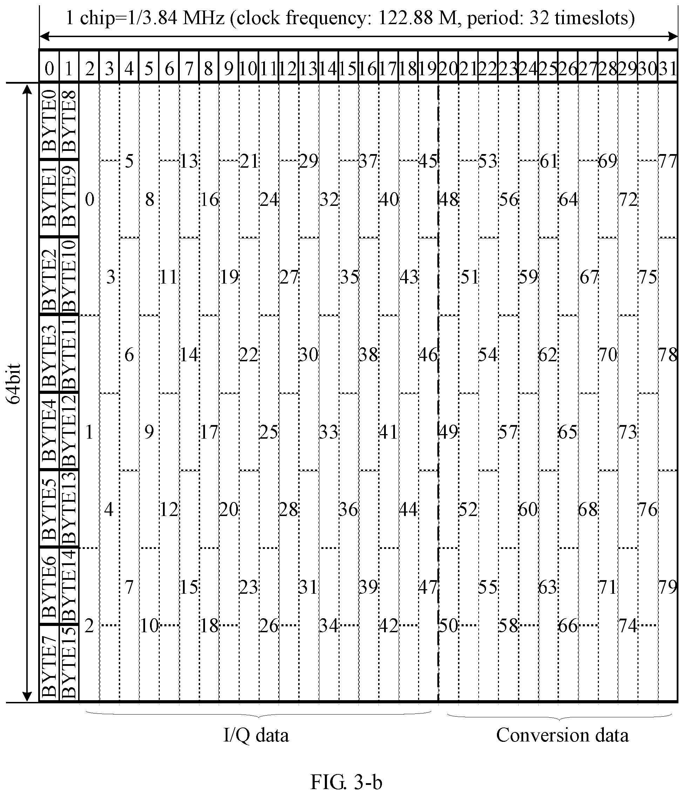

FIG. 3-b is a schematic diagram of an implementation manner in which an idle resource on a CPRI channel carries conversion data according to an embodiment of the present invention;

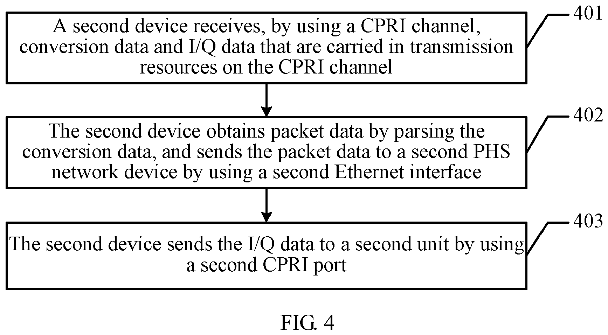

FIG. 4 is a schematic block flowchart of another data transmission method according to an embodiment of the present invention;

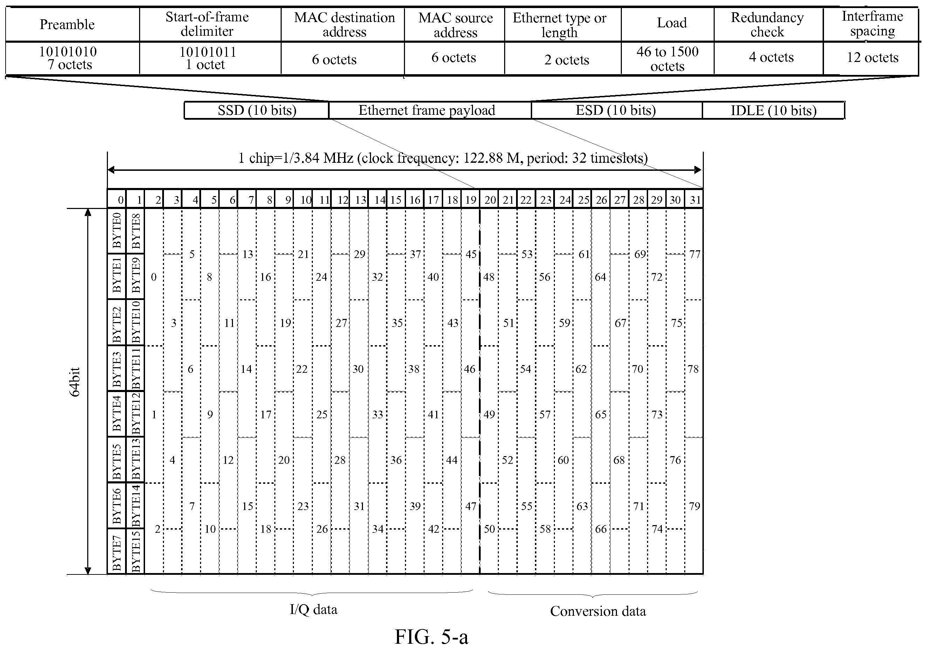

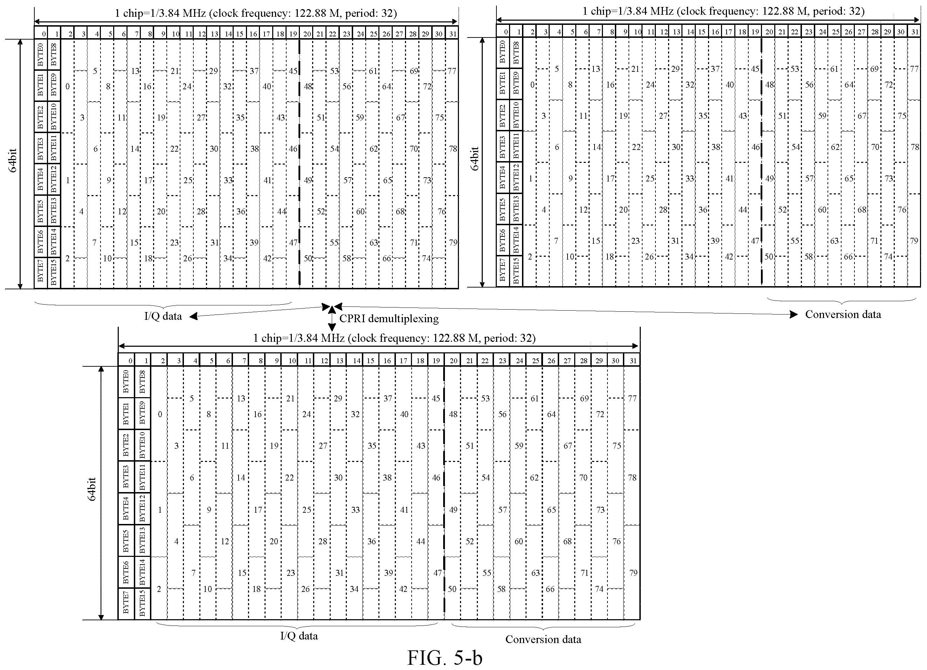

FIG. 5-a is a schematic diagram of an implementation manner in which transmission resources on a CPRI channel carry conversion data and I/Q data according to an embodiment of the present invention;
FIG. 5-b is a schematic diagram of an implementation manner in which CPRI data is demultiplexed into I/Q data and conversion data according to an embodiment of the present invention;

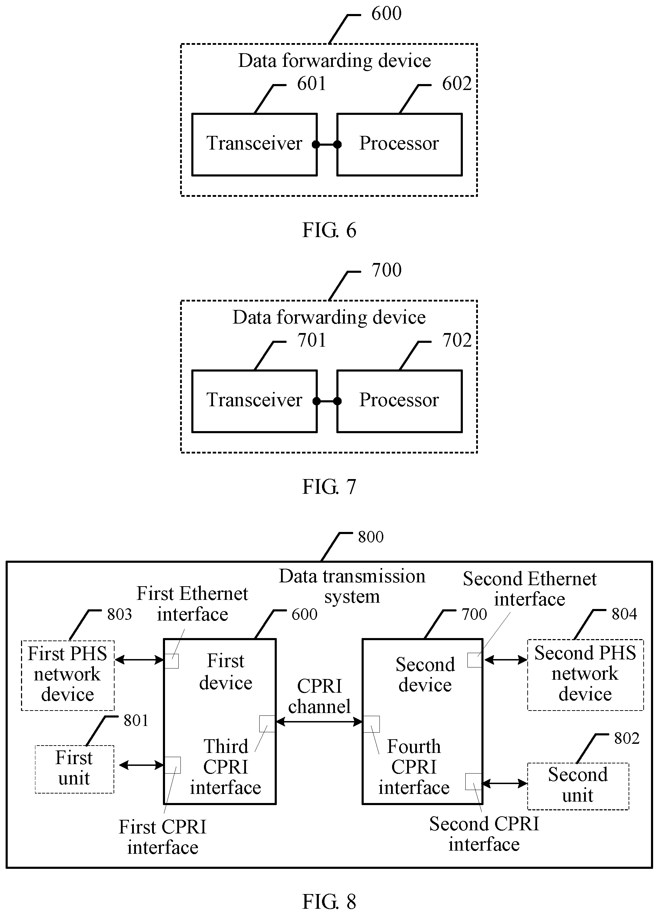

FIG. 6 is a schematic structural composition diagram of a data transfer device according to an embodiment of the present invention;
FIG. 7 is a schematic structural composition diagram of another data transfer device according to an embodiment of the present invention; and
FIG. 8 is a schematic structural composition diagram of a data transmission system according to an embodiment of the present invention.

### DESCRIPTION OF EMBODIMENTS

Embodiments of the present invention provide a data transmission method, a data transfer device, and a system, so as to solve a problem of low transmission bandwidth utilization of an existing CPRI port.

To make the objectives, features, and advantages of the present invention clearer and more understandable, the following clearly and completely describes the technical solutions in the embodiments of the present invention with reference to the accompanying drawings in the embodiments of the present invention. Apparently, the embodiments described below are merely some rather than all of the embodiments of the present invention. All other embodiments obtained by a person skilled in the art based on the embodiments of the present invention shall fall within the protection scope of the present invention.

In the specification, claims, and accompanying drawings of the present invention, the terms "first", "second", and so on are intended to distinguish between similar objects but do not necessarily indicate a
specific order or sequence. It should be understood that this is merely a distinguishing manner used to describe objects having the same attribute in the embodiments of the present invention and terms used in this manner are interchangeable in a proper case. Moreover, the terms "include", "contain" and any other variants mean to cover the non-exclusive inclusion, so that a process, method, system, product, or device that includes a list of units is not necessarily limited to those units, but may include other units not expressly listed or inherent to such a process, method, system, product, or device.

To introduce the data transmission method provided in the embodiments of the present invention in detail, an implementation process of data processing in the data transmission method is first described, and subsequently a process of communication between two data transfer devices according to the data transmission method provided in the embodiments of the present invention is described, where the two data transfer devices are separately a first data transfer device and a second data transfer device, and the two data transfer devices are briefly referred to as a first device and a second device respectively in subsequent description of the embodiments.

Referring to FIG. 1-a, which is a schematic flowchart of data processing in a data transmission method according to an embodiment of the present invention, a downlink data transmission process is used as an example.

A first device receives, by using a first Ethernet interface, packet data from a PHS server device, and the first device receives, by using a first CPRI port, I/Q data from a BBU, where a format of the I/Q data received by the first device by using the first CPRI port conforms to a CPRI protocol; the first device maps a format of the packet data from an Ethernet protocol to the CPRI protocol, and converts the packet data into conversion data; subsequently, the first device multiplexes the conversion data and the I/Q data onto a CPRI channel, to obtain CPRI data; the first device sends the CPRI data to a second device by using the CPRI channel.

The second device receives, by using the CPRI channel, the CPRI data sent by the first device; subsequently, the second device demultiplexes the CPRI data into the I/Q data and the conversion data; then the second device restores the conversion data to the packet data, the second device sends the packet data to a PHS client device by using a second Ethernet interface, and the second device sends the I/Q data to an RRU by using a second CPRI port.

After the first device generates the CPRI data, the first device sends the CPRI data to the second device by using the CPRI channel. In an actual application, the first device is further provided with a third CPRI port that is configured to transmit the CPRI data, and the second device can receive the CPRI data by using the CPRI channel; in this case, the second device is further provided with a fourth CPRI port that is configured to transmit the CPRI data, and the third CPRI port that is configured to transmit the CPRI data and provided in the first device and the fourth CPRI port that is configured to transmit the CPRI data and provided in the second device are connected by the CPRI channel. A physical CPRI channel between the first device and the second device may specifically be implemented by means of a fiber or an Ethernet cable connection. It should be noted that FIG. 1-a and FIG. 1-b do not show the third CPRI port of the first device and the fourth CPRI port provided in the second device. In addition, in this embodiment of the present invention, the first device and the PHS server device may specifically be connected by an Ethernet cable.

It should be noted that in the foregoing embodiment, that the format of the I/Q data conforms to the CPRI protocol may also mean that the I/Q data is data of a CPRI format. In addition, that the first device multiplexes the conversion data and the I/Q data onto the CPRI channel may also be construed as: the first device carries the conversion data and the I/Q data to the CPRI channel; carrying the conversion data and the I/Q data in the CPRI channel is described from the perspective of a dynamic data transmission process, and multiplexing the conversion data and the I/Q data onto the CPRI channel is a static result after the data is carried. A data transmission manner of the conversion data and the I/Q data in this embodiment of the present invention can be correctly and clearly recorded from whichever aspect of description. In addition, after the second device receives, by using the CPRI channel, the data sent by the first device, the second device demultiplexes the received data, to obtain the conversion data and the I/Q data, where a process in which the second device demultiplexes the received data is reverse to a process in which the first device multiplexes the conversion data and the I/Q data onto the CPRI channel. Specifically, according to field identifiers in the conversion data and the I/Q data, the conversion data and the I/Q data may be obtained by parsing the received data.

Referring to FIG. 1-b, which is a schematic flowchart of data processing in another data transmission method according to an embodiment of the present invention, an uplink data transmission process is used as an example.

A first device receives, by using a first Ethernet interface, packet data from a PHS client device, and the first device receives, by using a first CPRI port, I/Q data from an RRU, where the I/Q data received by the first device by using the first CPRI port conforms to a CPRI protocol; the first device maps a format of the packet data from an Ethernet protocol to the CPRI protocol, and converts the packet data into conversion data; subsequently, the first device multiplexes the conversion data and the I/Q data onto a CPRI channel, to obtain CPRI data; the first device sends the CPRI data to a second device by using the CPRI channel.

The second device receives, by using the CPRI channel, the CPRI data sent by the first device; subsequently, the second device demultiplexes the CPRI data into the I/Q data and the conversion data; then the second device restores the conversion data to the packet data, the second device sends the packet data to a PHS server device by using a second Ethernet interface, and the second device sends the I/Q data to a BBU by using a second CPRI port.

As can be seen, the first device can convert the packet data into the conversion data whose format conforms to the CPRI protocol, and multiplex the conversion data and the I/Q data onto the CPRI channel, to obtain the CPRI data. In other words, the first device can implement co-transmission of the packet data and the I/Q data by using the CPRI channel. On a side of the second device, the second device may receive, by using the CPRI channel, the CPRI data sent by the first device, and the second device demultiplexes the CPRI data to obtain the I/Q data and the conversion data, and restores the conversion data to the packet data, which does not change data content of the packet data, and does not affect normal usage of the packet data by the PHS network device. Therefore, the I/Q data sent by the BBU or the RRU occupies only some of transmission resources on the CPRI channel, and idle resources may still exist after the transmission resources on the CPRI channel carry the I/Q data transmitted between the BBU and the RRU. These idle resources can be used to transmit the packet data sent by the PHS network device, which can prevent waste of resources that occurs when only the I/Q data is transmitted on the CPRI channel, and greatly improve transmission bandwidth utilization of the CPRI channel that is used to transmit the I/Q data between the BBU and the RRU. Moreover, the packet data sent by the PHS network device can be multiplexed onto the CPRI channel for transmission, which can save network resources used to transmit the packet data.

By means of the foregoing description of the entire data transmission process, the entire detailed data processing process in this embodiment of the present invention can be learned. Subsequently, data transfer devices are separately described in detail. In description of the following embodiments, a first data transfer device is briefly referred to as a first device, and a second data transfer device is briefly referred to as a second device.

An embodiment of a data transmission method in the present invention may be applied to the first device. The method may include: receiving, by the first device by using a first Ethernet interface, packet data sent by a first packet handling switching (Packet Handling Switching, PHS) network device, and receiving, by using a first CPRI port, in-phase/quadrature (In-Phase and Quadrature, I/Q) data sent by a first unit; converting, by the first device, the packet data into conversion data whose format conforms to a CPRI protocol; and carrying, by the first device, the conversion data and the I/Q data in transmission resources on a CPRI channel, and sending the conversion data and the I/Q data carried in the transmission resources to the second device. The first PHS network device is a PHS server device, and the first unit is a baseband unit (Baseband Unit, BBU); or the first PHS network device is a PHS client device, and the first unit is a remote radio unit (Remote Radio Unit, RRU).

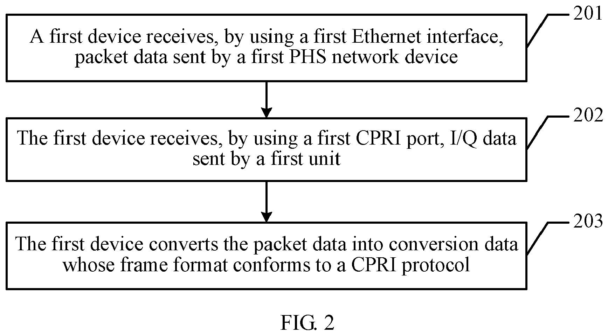

Referring to FIG. 2, a data transmission method according to an embodiment of the present invention may specifically include the following steps:
201. A first device receives, by using a first Ethernet interface, packet data sent by a first PHS network device.

The first PHS network device is specifically a PHS server device or a PHS client device.

If this embodiment of the present invention describes a downlink data transmission method, the first PHS network device in step 201 specifically refers to a PHS server device. After the PHS server device generates packet data, the PHS server device sends the packet data to the first device, where the packet data specifically refers to downlink packet data; the first device is provided with an Ethernet (Ethernet) interface, and the first device may receive the packet data by using the provided Ethernet interface. To distinguish it from an Ethernet interface provided in a second device in a subsequent embodiment, the Ethernet interface provided in the first device is defined as a first Ethernet interface, and the Ethernet interface provided in the second device is defined as a second Ethernet interface. In the prior art, if the first device receives a packet data from the PHS server device, the first device directly sends it to a PHS client device over an Ethernet network; however, in this embodiment of the present invention, different from the prior art, after the first device receives the packet data, the first device in this embodiment of the present invention transmits the packet data by using a CPRI channel between the first device and the second device. For details of a specific implementation process, refer to description of subsequent embodiments.

If this embodiment of the present invention describes an uplink data transmission method, the first PHS network device in step 201 specifically refers to a PHS client device. After the PHS client device generates packet data, the PHS client device sends the packet data to the first device, where the packet data specifically refers to uplink packet data; the first device receives the packet data by using the first Ethernet interface. In the prior art, if the first device receives a packet data from the PHS client device, the first device directly sends it to a PHS server device over an Ethernet network; however, in this embodiment of the present invention, different from the prior art, after the first device receives the packet data, the first device in this embodiment of the present invention transmits the packet data by using a CPRI channel between the first device and the second device. For details of a specific implementation process, refer to description of subsequent embodiments.

202. The first device receives, by using a first CPRI port, I/Q data sent by a first unit.

When the first PHS network device is specifically a PHS server device, the first unit is specifically a BBU; when the first PHS network device is specifically a PHS client device, the first unit is specifically an RRU.

When the first device receives the packet data from the PHS server device, it indicates that this embodiment describes that the first device performs the downlink data transmission method; if the first device receives downlink packet data, and the first device also receives downlink I/Q data, then step 203 may be performed. As shown in FIG. 1-a, the first device respectively receives the packet data from the PHS server device and receives the I/Q data from the BBU.

When the first device receives the packet data from the PHS client device, it indicates that this embodiment describes that the first device performs the uplink data transmission method. In other words, if the first device receives uplink packet data, and the first device also receives uplink I/Q data, then step 203 is also performed. As shown in FIG. 1-b, the first device respectively receives the packet data from the PHS client device and receives the I/Q data from the RRU.

It should be noted that the I/Q data sent by the BBU or the RRU and received by the first device by using the first CPRI port refers to data transmitted between the BBU and the RRU, and the I/Q data may also be referred to as antenna data or a vector (vector) in some specific applications. In addition, a sequence of the foregoing step 201 and step 202 is not limited when they are performed, that is, step 201 may be performed first and then step 202 is performed, or step 202 may be performed first and then step 201 is performed, or step 201 and step 202 may be performed simultaneously, which may specifically be set with reference to an application scenario of the method in the present invention and is not limited herein. In FIG. 2, one of implementation manners is described by using an example in which step 201 is performed first and then step 202 is performed, which, however, is not used to limit the present invention.

203. The first device converts the packet data into conversion data whose format conforms to a CPRI protocol.

The foregoing conversion data is the packet data that is converted and whose format conforms to the CPRI protocol.

In this embodiment of the present invention, after the first device receives the packet data, the first device performs format conversion on the foregoing packet data according to the CPRI protocol, to obtain the conversion data. In this case, the conversion data is the packet data that is converted and whose format conforms to the CPRI protocol. Format conversion performed by the first device on the packet data refers to adding of a field to the packet data, where the field is encapsulated in order to conform to the CPRI protocol. The format conversion is performed on the packet data, so that the generated conversion data can conform to a requirement of the CPRI protocol, and therefore may be transmitted by using a CPRI channel, and the conversion data may also be referred to as data of a CPRI format. In addition, in this embodiment of the present invention, the format conforming to the CPRI protocol may specifically refer to a frame format conforming to the CPRI protocol, for example, the conversion data is data whose format conforms to the CPRI protocol.

In some embodiments of the present invention, that the first device converts the packet data into conversion data in step 203 may specifically include: the first device encapsulates CPRI format fields in the packet data, so that the packet data with the encapsulated CPRI format fields is the conversion data, where the CPRI format fields include: a start-of-stream delimiter (Start-of-Stream Delimiter, SSD) field, an end-of-stream delimiter (End-of-Stream-Delimiter, ESD) field, and an interframe idle (idle) field. According to a requirement of the CPRI protocol on a definition of a frame format, the SSD field, the ESD field, and the idle field may be separately added to the packet data, where the SSD field generally occupies 10 bits (bit), the ESD field generally occupies 10 bits, and the idle field occupies 10 bits.

204. The first device carries the conversion data and the I/Q data in transmission resources on a CPRI channel, and sends the conversion data and the I/Q data carried in the transmission resources to a second device.

In this embodiment of the present invention, after the first device converts the packet data into the conversion data, the first device may multiplex the conversion data and the I/Q data onto the CPRI channel, and may obtain CPRI data. Herein, the CPRI data refers to data that exists on the CPRI channel and may be transmitted to the second device, after the first device multiplexes the conversion data and the I/Q data onto the CPRI channel. Multiplexing of the conversion data and the I/Q data by the first device refers to carrying of the I/Q data and the conversion data in the transmission resources on the CPRI channel; after the I/Q data and the conversion data are multiplexed onto the CPRI channel, co-transmission of the conversion data and the I/Q data may be performed by using the CPRI channel, so that the conversion data can be transmitted by occupying remaining idle resources after the transmission resources on the CPRI channel carry the I/Q data, thereby preventing waste of transmission resources that occurs when the CPRI channel is directly used to transmit only the I/Q data.

In this embodiment of the present invention, after the first unit generates the I/Q data, the I/Q data is multiplexed onto the CPRI channel, and the I/Q data occupies only some of the transmission resources on the CPRI channel, but does not occupy all the transmission resources on the CPRI channel, so that there are idle resources on the CPRI channel. In other words, after carrying the I/Q data, the transmission resources on the CPRI channel still have CPRI subframes that are almost blank subframes (translated into English as almost blank subframe). No actual service data is currently transmitted in these CPRI subframes. When only the I/Q data is transmitted on the CPRI channel, these idle resources still occupy bandwidth of a network, causing waste of the transmission resources. Therefore, in this embodiment of the present invention, after the packet data is converted into the conversion data whose format conforms to the CPRI protocol, the conversion data and the I/Q data may be multiplexed together onto the CPRI channel, that is, the conversion data and the I/Q data may be carried together by using the CPRI channel, so that utilization of the transmission resources on the CPRI channel can be improved, thereby preventing waste of the transmission resources that occurs when only the I/Q data is transmitted on the CPRI channel.

It should be noted that when the I/Q data is multiplexed onto the CPRI channel, remaining idle resources inevitably exist, and this is determined by an attribute of the I/Q data, which is that the I/Q data is used to transmit information. In addition, in this embodiment of the present invention, for a CPRI channel in a TDD mode, an idle resource may specifically refer to an idle moment and idle bandwidth; for a CPRI channel in an FDD mode, an idle resource may specifically refer to idle bandwidth.

In this embodiment of the present invention, the packet data is data to be sent by the first PHS network device to a second PHS network device, and the I/Q data is data to be sent by the first unit to a second unit. The second device is configured to provide the packet data for the second PHS network device, and provide the I/Q data for the second unit, where a second Ethernet interface of the second device is connected to the second PHS network device, and a second CPRI port of the second device is connected to the second unit.

Specifically, when the first PHS network device is a PHS server device, the second PHS network device is a PHS client device, and the second unit is an RRU; or when the first PHS network device is a PHS client device, the second PHS network device is a PHS server device, and the second unit is a BBU.

If this embodiment of the present invention describes the downlink data transmission method, the second unit to which the second CPRI port of the second device is connected is an RRU. The first device receives the packet data from the PHS server device, and receives the I/Q data from the BBU; subsequently, the first device converts the packet data into the conversion data, the first device multiplexes the conversion data and the I/Q data onto the CPRI channel, to obtain the CPRI data, and the second device receives the CPRI data by using the CPRI channel and performs demultiplexing and restoration, so that the second device is connected to the RRU.

If this embodiment of the present invention describes the uplink data transmission method, the second unit to which the second CPRI port of the second device is connected is a BBU. The first device receives the packet data from the PHS client device, and receives the I/Q data from the RRU; subsequently, the first device converts the packet data into the conversion data, the first device multiplexes the conversion data and the I/Q data onto the CPRI channel, to obtain the CPRI data, and the second device receives the CPRI data by using the CPRI channel and performs demultiplexing and restoration, so that the second device is connected to the BBU.

Specifically, in some embodiments of the present invention, two ends of the CPRI channel are separately a third CPRI port of the first device and a fourth CPRI port of the second device, and that the first device sends the conversion data and the I/Q data carried in the transmission resources to a second device in step 204 includes: sending the conversion data and the I/Q data carried in the transmission resources to the fourth CPRI port of the second device by using the third CPRI port of the first device.

In some embodiments of the present invention, that the first device carries the conversion data and the I/Q data in transmission resources on a CPRI channel in step 204 may include the following steps:
A1. The first device carries the I/Q data in the transmission resources on the CPRI channel.
A2. The first device acquires, in the transmission resources on the CPRI channel, an idle resource that is not occupied by the I/Q data.
A3. The first device carries the conversion data in the idle resource.

The first device first carries the I/Q data in the transmission resources on the CPRI channel, and the I/Q data occupies only some of the transmission resources on the CPRI channel, but does not occupy all the transmission resources on the CPRI channel. The first device can acquire, in the transmission resources on the CPRI channel, an idle resource that is not occupied by the I/Q data, and the idle resource, in all the transmission resources on the CPRI channel, that is not occupied by the I/Q data can be used to transmit the conversion data. Because the foregoing conversion data is data obtained by performing, according to the CPRI protocol, format conversion on the packet data, the conversion data can be transmitted by using the CPRI channel, so as to prevent waste of the transmission resources that occurs when only the I/Q data is transmitted in the transmission resources on the CPRI channel.

Specifically, when the first device works in the TDD mode, that the first device acquires, in the transmission resources on the CPRI channel, an idle resource that is not occupied by the I/Q data in step A2 may specifically be:
the first device acquires, in transmission moments of the CPRI channel in a time resource an idle moment that is not occupied by the I/Q data, where the idle moment is a time, of the CPRI channel in the time resource, that is not occupied by the I/Q data.

In other words, when the first device works in the TDD mode, the BBU and the RRU both work in the TDD mode. In the TDD mode, for the I/Q data, only downlink or uplink data is transferred at a transmission moment in the time resource; therefore, when the I/Q data is carried in the transmission resources on the CPRI channel, many idle moments exist in the transmission resources on the CPRI channel, and service data is not transferred at these idle moments. Therefore, in this embodiment of the present invention, step A3 may specifically be: the first device carries the conversion data in the idle moments. The following Table 1 is a table of configuration parameters of uplink and downlink CPRI subframes provided in this embodiment of the present invention.

**Table 1**

| Uplink and downlink subframe identifier | Uplink and downlink conversion period | Subframe number | | | | | | | | | |
|---|---|---|---|---|---|---|---|---|---|---|---|
| | | 0 | 1 | 2 | 3 | 4 | 5 | 6 | 7 | 8 | 9 |
| 1 | 5 ms | D | S | U | U | D | D | S | U | U | D |
| Downlink CPRI | | I/Q | I/Q | NULL | NULL | I/Q | I/Q | I/Q | NULL | NULL | I/Q |
| Uplink CPRI | | NULL | I/Q | I/Q | I/Q | NULL | NULL | I/Q | I/Q | I/Q | NULL |

As can be seen, when the first device works in the TDD mode, as can be learned from a subframe configuration manner when a subframe identifier is 1, for a downlink data transmission method of the CPRI channel, "D" in Table 1 indicates that only a downlink CPRI carries I/Q data, "S" indicates that both the downlink CPRI and an uplink CPRI carry I/Q data, and "U" indicates that only the uplink CPRI carries I/Q data. In subframes numbered 2, 3, 7, and 8, no I/Q data is carried, and therefore transmission moments corresponding to the subframes numbered 2, 3, 7, and 8 are idle moments; "NULL" in Table 1 is used to indicate that no service data is transmitted, and I/Q data is carried only in subframes numbered 0, 1, 4, 5, 6, and 9. For an uplink data transmission method of the CPRI channel, in subframes numbered 0, 4, 5, and 9, no I/Q data is carried, and therefore transmission moments corresponding to the subframes numbered 0, 4, 5, and 9 are idle moments; "NULL" in Table 1 is used to indicate that no service data is transmitted, and I/Q data is carried only in subframes numbered 1, 2, 3, 6, 7, and 8. Therefore, when a device in which the CPRI channel is located works in the TDD mode, some timeslots are idle on the CPRI channel in the TDD mode, and this causes low transmission bandwidth utilization of the CPRI channel.

Based on the data transmission method provided in this embodiment of the present invention, refer to table 2, which is a table of an implementation manner in which the conversion data is carried in the idle resource on the CPRI channel according to this embodiment of the present invention.

**Table 2**

| Uplink and downlink subframe identifier | Uplink and downlink conversion period | Subframe number | | | | | | | | | |
|---|---|---|---|---|---|---|---|---|---|---|---|
| | | 0 | 1 | 2 | 3 | 4 | 5 | 6 | 7 | 8 | 9 |
| 1 | 5 ms | D | S | U | U | D | D | S | U | U | D |
| Downlink CPRI | | I/Q | I/Q | PHS | PHS | I/Q | I/Q | I/Q | PHS | PHS | I/Q |
| Uplink CPRI | | PHS | I/Q | I/Q | I/Q | PHS | PHS | I/Q | I/Q | I/Q | PHS |

In the foregoing Table 2, "PHS" is used to indicate conversion data. In uplink and downlink data transmission processes, the conversion data is carried in the idle resource on the CPRI channel. As can be learned by comparing Table 1 with Table 2, "NULL" in table 1 that indicates idle resources is used to carry conversion data (that is, PHS shown in table 2) . As can be seen, the conversion data can be transmitted by using the idle resource on the CPRI channel, thereby improving transmission bandwidth utilization of the CPRI channel.

In addition, in some embodiments of the present invention, when the first device works in the FDD mode, that the first device acquires, in the transmission resources on the CPRI channel, an idle resource that is not occupied by the I/Q data in step A2 may specifically be:
the first device acquires, in transmission bandwidth of the CPRI channel in a frequency resource, an idle frequency that is not occupied by the I/Q data, where the idle frequency is a frequency, of the CPRI channel in the frequency resource, that is not occupied by the I/Q data.

In other words, when the first device works in the FDD mode, the BBU and the RRU both work in the FDD mode. In the FDD mode, the I/Q data occupies only some of the transmission resources in the transmission bandwidth of the frequency resource; therefore, when the I/Q data is carried in the transmission resources on the CPRI channel, many idle frequencies exist in the transmission resources on the CPRI channel, and service data is not transferred on these idle frequencies. Therefore, in this embodiment of the present invention, step A3 may specifically be: the first device carries the conversion data in the idle frequencies. FIG. 3-a is a schematic diagram of an implementation manner in which transmission resources on a CPRI channel carry I/Q data according to an embodiment of the present invention. In this embodiment of the present invention, the I/Q data is carried in the transmission resources on the CPRI channel.

In FIG. 3-a, an example is given, in which 3*20M 2T2R 12bit I/Q data is mapped to a 9.8G CPRI channel, where, 3*20M is cell bandwidth, 12bit is a bit width of the I/Q data, 9.8G is a line rate of a CPRI channel, bit/s is used as a unit, 2T (T is the abbreviation of an English word Transfer) indicates 2 transmit antennas, 2R (R is the abbreviation of Receive) indicates 2 receive antennas, a timeslot 0 and a timeslot 1 together carry control data of BYTE 0, BYTE 1, BYTE 3, ..., and BYTE 15, and other timeslots (for example, a timeslot 2, ..., and a timeslot 31) may carry the I/Q data. In an example in which the first device has 2 transmit antennas, and the second device has 2 receive antennas, the transmission resources on the CPRI channel occupied by the I/Q data are antenna-carrier (Antenna-carrier, AxC) I/Q pairs labeled 0, 1, 2, ..., and 47 shown in FIG. 3-a, that is, the I/Q data occupies only some of the transmission resources on the CPRI channel, but does not occupy all the transmission resources on the CPRI channel, and idle frequency resources still exist. As shown in FIG. 3-a, AxC I/Q pairs labeled 48 to 79 are idle frequency resources that are not occupied by the I/Q data, and are marked by NULL; in FIG. 3-a, a dashed line is used to separate the I/Q data from NULL. The idle frequency resources account for 40% of the entire transmission resources on the CPRI channel. Therefore, when the first device works in the FDD mode, frequency resources occupied by the I/Q data in the entire transmission resources on the CPRI channel do not occupy entire bandwidth, and remaining idle resources are wasted. Some bandwidth is idle on the CPRI channel in the FDD mode, and this also causes low transmission bandwidth utilization of the CPRI channel.

Based on the data transmission method provided in this embodiment of the present invention, refer to FIG. 3-b, which is a schematic diagram of an implementation manner in which conversion data is carried in an idle resource on a CPRI channel according to this embodiment of the present invention.

In FIG. 3-b, in uplink and downlink data transmission processes, the conversion data is carried in the idle resource on the CPRI channel, that is, the conversion data may occupy the AxC I/Q pairs labeled 48 to 79 on the CPRI channel. As can be learned by comparing FIG. 3-a with FIG. 3-b, the conversion data is carried in "NULL" in FIG. 3-a that indicates an idle resource, that is, the conversion data may be carried in the idle resource on the CPRI channel. As can be seen, the conversion data can be transmitted by using the idle resource on the CPRI channel, thereby improving transmission bandwidth utilization of the CPRI channel.

It should be noted that in the description of the example in the foregoing FIG. 3-a, a dashed line is used to separate the I/Q data from NULL; in the description of the example in the foregoing FIG. 3-b, a dashed line is used to separate the I/Q data from the antenna data. Description is given by using the foregoing example in which the I/Q data occupies AxC I/Q pairs labeled 0, 1, 2, ..., and 47 on the CPRI channel. However, the transmission resources on the CPRI channel occupied by the I/Q data in an actual application are not necessarily AxC I/Q pairs consecutively labeled 0, 1, 2, ..., and 47, but the transmission resources on the CPRI channel that are occupied may discrete. For example, the I/Q data may occupy an AxC I/Q pair labeled 0, an AxC I/Q pair labeled 5, an AxC I/Q pair labeled 37, and the like. In this case, the I/Q data also occupies only some of the transmission resources on the CPRI channel, but does not occupy all the transmission resources on the CPRI channel, and idle frequency resources still exist. According to the foregoing example, the conversion data may still occupy AxC I/Q pairs labeled 1, 2, 3, and 4 on the CPRI channel, and an idle resource that is not occupied by the I/Q data in the transmission resources on the CPRI channel may be used to transmit the conversion data, so as to improve resource utilization on the CPRI channel.

In some other embodiments of the present invention, that the first device carries the conversion data and the I/Q data in transmission resources on a CPRI channel in step 204 may include the following steps:
B1. The first device determines, in the transmission resources on the CPRI channel, a first transmission resource used to carry the I/Q data and a second transmission resource used to carry the conversion data.
B2. The first device carries the I/Q data in the first transmission resource, and carries the conversion data in the second transmission resource.

It should be noted that in step B1, the first device may pre-allocate the transmission resources on the CPRI channel, and the transmission resources on the CPRI channel are divided into two parts of transmission resources, so that the first transmission resource and the second transmission resource are determined, and then the first device may carry the I/Q data in the first transmission resource and carry the conversion data in the second transmission resource, thereby implementing co-transmission of the packet data and the I/Q data by using the transmission resources on the CPRI channel. Illustration is made as follows: FIG. 3-a is still used as an example, in which the first device divides the transmission resources on the CPRI channel into two parts of transmission resources, determines AxC I/Q pairs labeled 0, 1, 2, ..., and 47 to be the first transmission resource, and determines AxC I/Q pairs labeled 48, 49, ..., and 79 to be the second transmission resource. Therefore, when the conversion data and the I/Q data are transmitted, the I/Q data may be carried in the first transmission resource, and the conversion data may be carried in the second transmission resource, thereby implementing co-transmission of the packet data and the I/Q data by using the transmission resources on the CPRI channel.

As can be learned from the description of the present invention in the foregoing embodiments, after being processed by a first device, packet data from a PHS network device and I/Q data from a BBU (or an RRU) can be carried in transmission resources on a CPRI channel and sent to a second device, and can be provided by the second device for another PHS network device and the RRU (or BBU) respectively. Therefore, the volume of data carried in the transmission resources on the CPRI channel increases, and resource utilization is improved, thereby solving a problem of low transmission bandwidth utilization of a CPRI port.

Another embodiment of the data transmission method in the present invention may be applied to a second device. The method may include: receiving, by the second device by using a CPRI channel, conversion data and I/Q data that are carried in transmission resources on the CPRI channel, where a format of the conversion data and a format of the I/Q data both conform to a CPRI protocol; obtaining, by the second device, packet data by parsing the conversion data, and sending the packet data to a second PHS network device by using a second Ethernet interface; and sending, by the second device, the I/Q data to a second unit by using a second CPRI port, where the second PHS network device is a PHS server device, and the second unit is specifically a BBU; or the second PHS network device is a PHS client device, and the second unit is an RRU.

Referring to FIG. 4, a data transmission method according to another embodiment of the present invention may specifically include the following steps:
401. A second device receives, by using a CPRI channel, conversion data and I/Q data that are carried in transmission resources on the CPRI channel.

A format of the conversion data and a format of the I/Q data both conform to a CPRI protocol, and the conversion data and the I/Q data are sent by a first device to the second device by using the CPRI channel.

In this embodiment of the present invention, a CPRI port is provided in each of the first device and the second device, the first device and the second device are connected by the CPRI channel, and the CPRI channel may specifically be implemented by means of a fiber or an Ethernet cable connection. Specifically, two ends of the CPRI channel are separately a third CPRI port of the first device and a fourth CPRI port of the second device, and that a second device receives conversion data and I/Q data that are carried in transmission resources on the CPRI channel in step 401 may include: the second device receives, by using the fourth CPRI port of the second device, the conversion data and the I/Q data that are sent by the first device by using the third CPRI port of the first device, where the conversion data and the I/Q data are carried in the transmission resources on the CPRI channel.

If this embodiment of the present invention describes a downlink data transmission method, referring to FIG. 1-a, the second device is separately connected to the PHS server device and the RRU; if this embodiment of the present invention describes an uplink data transmission method, referring to FIG. 1-b, the second device is separately connected to the PHS client device and the BBU.

In some embodiments of the present invention, that a second device receives conversion data and I/Q data that are carried in transmission resources on the CPRI channel in step 401 may specifically include the following steps:
C1. The second device determines a first transmission resource used to carry the I/Q data and a second transmission resource used to carry the conversion data.
C2. The second device reads the I/Q data from the first transmission resource, and reads the conversion data from the second transmission resource.

In step C1, a manner in which the second device divides the transmission resources on the CPRI channel is the same as a manner in which the first device divides the transmission resources on the CPRI channel, and then the first transmission resource and the second transmission resource are determined. Only when the first device and the second device use the same manner of dividing the transmission resources, can the second device receive, based on the determined first transmission resource and second transmission resource, data that is separately carried in the first transmission resource and the second transmission resource, that is, the second device can read the I/Q data from the first transmission resource, and read the conversion data from the second transmission resource.

It should be noted that in step C1, a sequence of determining the first transmission resource and the second transmission resource by the second device is not limited, and similarly, in step C2, a sequence of reading the I/Q data and the conversion data by the second device is not limited either.

In some embodiments of the present invention, that a second device receives conversion data and I/Q data that are carried in transmission resources on the CPRI channel in step 401 may specifically include the following steps:
D1. The second device determines a first transmission resource, and reads the I/Q data from the first transmission resource.
D2. The second device determines a transmission resource except the first transmission resource in the transmission resources on the CPRI channel.
D3. The second device determines the transmission resource except the first transmission resource in the transmission resources on the CPRI channel to be a second transmission resource, and reads the conversion data from the second transmission resource.

First, in step D1, the I/Q data can be read from the first transmission resource on the CPRI channel according to a preamble field of the I/Q data, and in step D2, the transmission resource except the first transmission resource in the transmission resources on the CPRI channel is determined. The transmission resource except the first transmission resource is the idle resource described in the foregoing embodiments, and may specifically refer to the idle moment described in the foregoing Table 1 and the idle frequency described in FIG. 3-a. At last, in step D3, the transmission resource except the first transmission resource in the transmission resources on the CPRI channel is determined to be the second transmission resource, and the conversion data is read from the second transmission resource.

It should be noted that a sequence of reading the I/Q data in step D1 and determining the second transmission resource in step D3 is not limited, that is, the I/Q data and the conversion data may be read together after the second transmission resource is determined, or the second transmission resource may be determined after the I/Q data is read, which is not limited herein.

Specifically, when the second device works in a TDD mode, that the second device determines a transmission resource except the first transmission resource in the transmission resources on the CPRI channel in step D2 includes: the second device acquires an occupied moment except a moment occupied by the I/Q data in transmission moments of the CPRI channel in a time resource.

In some other embodiments of the present invention, when the second device works in an FDD mode, that the second device determines a transmission resource except the first transmission resource in the transmission resources on the CPRI channel in step D2 includes: the second device acquires an occupied frequency except a frequency occupied by the I/Q data in transmission bandwidth of the CPRI channel in a frequency resource.

Specifically, packet data is data to be sent by a first PHS network device to a second PHS network device, and the I/Q data is data to be sent by a first unit to a second unit; and
the first device is configured to receive the packet data from the first PHS network device, receive the I/Q data from the first unit, and after converting the packet data into the conversion data, send the conversion data and the I/Q data to the second device by using the CPRI channel, where
a first Ethernet interface of the first device is connected to the first PHS network device, and a first CPRI port of the first device is connected to the first unit.

Specifically, when the second PHS network device is a PHS server device, the first PHS network device is a PHS client device, and the first unit is an RRU; or when the second PHS network device is a PHS client device, the first PHS network device is a PHS server device, and the first unit is a BBU.

402. The second device obtains packet data by parsing the conversion data, and sends the packet data to a second PHS network device by using a second Ethernet interface.

In this embodiment of the present invention, after the second device receives the conversion data by using the CPRI channel, the second device parses the conversion data, to obtain the packet data. In step 402, obtaining the packet data by parsing the conversion data is performed in a manner of restoring the conversion data. In the foregoing embodiments, the CPRI channel is used so that the packet data conforms to the CPRI protocol, and the first device performs conversion on the packet data. Therefore, in step 402, the conversion data needs to be restored, so as to be identified by the second PHS network device. The second device restores the format of the conversion data according to the CPRI protocol, to obtain the packet data. The restoring of the format of the conversion data by the second device refers to decapsulating a field conforming to the CPRI protocol in the conversion data. The conversion data is restored, and therefore the generated packet data for which a format requirement of the CPRI protocol is decapsulated can be identified by the second PHS network device.

Specifically, that the second device obtains packet data by parsing the conversion data in step 402 may include the following step:
the second device decapsulates a CPRI format field encapsulated in the conversion data, so that the conversion data whose CPRI format field is decapsulated is the packet data, where the CPRI format field includes: an SSD field, an ESD field, and an interframe idle field.

The second device can restore the conversion data to the packet data by using a decapsulation method corresponding to the foregoing encapsulation method used by the first device in the foregoing embodiments.

If this embodiment of the present invention describes the downlink data transmission method, referring to FIG. 1-a, the second device is separately connected to the PHS server device and the RRU, and therefore the second device sends the packet data to the PHS server device by using the second Ethernet interface; if this embodiment of the present invention describes the uplink data transmission method, referring to FIG. 1-b, the second device is separately connected to the PHS client device and the BBU, and therefore the second device sends the packet data to the PHS client device by using the second Ethernet interface.

403. The second device sends the I/Q data to a second unit by using a second CPRI port.

The second PHS network device is a PHS server device, and the second unit is specifically a BBU; or the second PHS network device is a PHS client device, and the second unit is an RRU.

If this embodiment of the present invention describes the downlink data transmission method, referring to FIG. 1-a, the second device is separately connected to the PHS server device and the RRU, and therefore the second device sends the I/Q data to the RRU by using the second CPRI port; if this embodiment of the present invention describes the uplink data transmission method, referring to FIG. 1-b, the second device is separately connected to the PHS client device and the BBU, and therefore the second device sends the I/Q data to the BBU by using the second CPRI port.

It should be noted that in this embodiment of the present invention, step 402 and step 403 do not have any timing or logical relationship between each other, that is, step 402 may be performed first and then step 403 is performed, and FIG. 4 shows only this implementation manner, or step 403 may be performed first and then step 402 is performed, or step 402 and step 403 may be performed simultaneously, which may specifically be set with reference to an application scenario of the method in the present invention and is not limited herein.

As can be learned from the description of the present invention in the foregoing embodiment, after being processed by a first device, packet data from a PHS network device and I/Q data from a BBU (or an RRU) can be carried in transmission resources on a CPRI channel and sent to a second device, and can be provided by the second device for another PHS network device and the RRU (or BBU) respectively. Therefore, the volume of data carried in the transmission resources on the CPRI channel increases, and resource utilization is improved, thereby solving a problem of low transmission bandwidth utilization of a CPRI port.

To help better understand and implement the foregoing solutions of the embodiments of the present invention, specific description is provided below by using a corresponding application scenario as an example.

Assuming that the first device and the second device work in an FDD mode, a downlink data transmission process is used as an example. Referring to FIG. 1-a, the first device is connected to the PHS server device by using the first Ethernet interface, the first device is connected to the BBU by using the first CPRI port, the first device and the second device are connected by the CPRI channel, the second device is connected to the PHS client device by using the second Ethernet interface, and the second device is connected to the RRU by using the second CPRI port.

First, the first device is described, and the first device performs the following steps:
S01. The first device receives, by using the first Ethernet interface, packet data sent by the PHS server device.
S02. The first device receives, by using the first CPRI port, I/Q data sent by the BBU.
S03. The first device converts the packet data into conversion data.

FIG. 5-a is a schematic diagram of an implementation manner in which conversion data and I/Q data are carried in transmission resources on a CPRI channel according to an embodiment of the present invention, where packet data is converted as an entire Ethernet frame payload. The first device separately adds an SSD field, an ESD field, and an idle field to the packet data, and therefore the packet data may be converted into the conversion data that conforms to a CPRI protocol. In addition, a frame structure feature of the packet data is shown in FIG. 5-a. The packet data includes a preamble that has 7 octets (octet), where a value of the preamble is 10101010; a start-of-frame delimiter that has 1 octet, where a value of the start-of-frame delimiter is 10101011; a media access control (Media Access Control, MAC) destination address that has 6 octets; a MAC source address that has 6 octets; an Ethernet type or length that has 2 octets; load that has 46 to 1500 octets; redundancy check that has 4 octets; and an interframe spacing that has 12 octets. The load is data information carried in the packet data.

S04. The first device carries the conversion data and the I/Q data in transmission resources on the CPRI channel, and sends the conversion data and the I/Q data carried in the transmission resources to the second device.

Referring to FIG. 5-a, in an example in which 3*20M 2T2R 12bit I/Q data is mapped to a 9.8G CPRI channel, the I/Q data (which may also be referred to as antenna data) and the conversion data are carried in transmission resources on the CPRI channel.

Subsequently, the second device is described, and the second device performs the following method steps:
S05. The second device receives, by using the CPRI channel, the conversion data and the I/Q data that are carried in the transmission resources on the CPRI channel and sent by the first device.

FIG. 5-b is a schematic diagram of an implementation manner in which data transmitted by transmission resources on a CPRI channel is demultiplexed into I/Q data and conversion data according to an embodiment of the present invention; in an example in which 3*20M 2T2R 12bit I/Q data is mapped to a 9.8G CPRI channel, the second device receives the I/Q data (which is also referred to as antenna data) and conversion data. It should be noted that FIG. 5-b is a schematic diagram of a process of the implementation manner in which the data transmitted by the transmission resources on the CPRI channel is demultiplexed; for description of all details of FIG. 5-b, reference may be made to the foregoing schematic description of FIG. 3-a, FIG. 3-b, and FIG. 5-a, and FIG. 3-a, FIG. 3-b, and FIG. 5-a show enlarged parts of FIG. 5-b.

S07. The second device obtains the packet data by parsing the conversion data, and sends the packet data to the second PHS network device by using the second Ethernet interface.

S08. The second device sends the I/Q data to the RRU by using the second CPRI port.

As can be learned from the description of the foregoing embodiments, a first device can convert packet data into conversion data whose format conforms to a CPRI protocol, carry the conversion data and I/Q data in transmission resources on a CPRI channel, and send the conversion data and the I/Q data carried in the transmission resources to a second device, so that co-transmission is performed by using the CPRI channel. Therefore, I/Q data sent by a BBU or an RRU occupies only some of the transmission resources on the CPRI channel. Idle resources may still exist after the transmission resources on the CPRI channel carry I/Q data between the BBU and the RRU, and these idle resources can be used to transmit packet data sent by a first PHS network device, which can prevent waste of resources that occurs when only I/Q data is transmitted on the CPRI channel, and greatly improve transmission bandwidth utilization of the CPRI channel that is used to transmit the I/Q data between the BBU and the RRU. Moreover, the packet data sent by the first PHS network device can be multiplexed onto the CPRI channel for transmission, which can save network resources used to transmit the packet data.

It should be noted that, for brief description, the foregoing method embodiments are represented as a series of actions. However, a person skilled in the art should appreciate that the present invention is not limited to the described order of the actions, because according to the present invention, some steps may be performed in other orders or simultaneously. In addition, a person skilled in the art should also understand that all the embodiments described in this specification belong to exemplary embodiments, and the involved actions and modules are not necessarily mandatory to the present invention.

To help better implement the foregoing solutions of the embodiments of the present invention, related apparatuses configured to implement the foregoing solutions are further provided below.

Referring to FIG. 6, an embodiment of the present invention provides a data transfer device 600. For steps that can be performed and/or functions that can be implementeddata transfer device, reference may be made to the description about the first device in the foregoing embodiments. For example, the data transfer device 600 includes a transceiver 601 and a processor 602, the data transfer device 600 is connected to a second device by using a CPRI channel, the transceiver 601 is connected to a first packet handling switching PHS network device by using a first Ethernet interface, and the transceiver 601 is connected to a first unit by using a first CPRI port, where
the transceiver 601 is configured to receive, by using the first Ethernet interface, packet data sent by the first PHS network device, and receive, by using the first CPRI port, in-phase/quadrature I/Q data sent by the first unit, where a format of the I/Q data conforms to a CPRI protocol;
the processor 602 is configured to convert the packet data into conversion data whose format conforms to the CPRI protocol; and
the processor 602 is further configured to carry the conversion data and the I/Q data in transmission resources on the CPRI channel, and send the conversion data and the I/Q data carried in the transmission resources to the second device by using the transceiver, where
the first PHS network device is a PHS server device, and the first unit is a baseband unit BBU; or the first PHS network device is a PHS client device, and the first unit is a remote radio unit RRU.

In some embodiments of the present invention, the packet data is data to be sent by the first PHS network device to a second PHS network device, and the I/Q data is data to be sent by the first unit to a second unit; and
the second device is configured to provide the packet data for the second PHS network device, and provide the I/Q data for the second unit, where a second Ethernet interface of the second device is connected to the second PHS network device, and a second CPRI port of the second device is connected to the second unit.

In some embodiments of the present invention, when the first PHS network device is a PHS server device, the second PHS network device is a PHS client device, and the second unit is an RRU; or
when the first PHS network device is a PHS client device, the second PHS network device is a PHS server device, and the second unit is a BBU.

In some embodiments of the present invention, the processor 602 is specifically configured to: carry the I/Q data in the transmission resources on the CPRI channel; acquire, in the transmission resources on the CPRI channel, an idle resource that is not occupied by the I/Q data; and carry the conversion data in the idle resource.

In some embodiments of the present invention, the processor 602 is specifically configured to: determine, in the transmission resources on the CPRI channel, a first transmission resource used to carry the I/Q data and a second transmission resource used to carry the conversion data; and carry the I/Q data in the first transmission resource, and carry the conversion data in the second transmission resource.

In some embodiments of the present invention, the data transfer device 600 further includes a third CPRI port, and two ends of the CPRI channel are separately the third CPRI port of the data transfer device and a fourth CPRI port of the second device; and
the transceiver 601 is specifically configured to send the conversion data and the I/Q data carried in the transmission resources to the fourth CPRI port of the second device by using the third CPRI port of the data transfer device.

As can be learned from the description of the present invention in the foregoing embodiment, after being processed by a first device, packet data from a PHS network device and I/Q data from a BBU (or an RRU) can be carried in transmission resources on a CPRI channel and sent to a second device, and can be provided by the second device for another PHS network device and the RRU (or BBU) respectively. Therefore, the volume of data carried in the transmission resources on the CPRI channel increases, and resource utilization is improved, thereby solving a problem of low transmission bandwidth utilization of a CPRI port.

Referring to FIG. 7, an embodiment of the present invention provides a data transfer device 700. For steps that can be performed and/or functions that can be implementeddata transfer device, reference may be made to the description about the second device in the foregoing embodiments. For example, the data transfer device 700 includes a transceiver 701 and a processor 702, the data transfer device 700 is connected to a first device by using a CPRI channel, the transceiver 701 is connected to a second packet handling switching PHS network device by using a second Ethernet interface, and the transceiver 701 is connected to a second unit by using a second CPRI port, where
the transceiver 701 is configured to receive, from the first device, conversion data and I/Q data that are carried in transmission resources on a common public radio interface CPRI channel, where a format of the conversion data and a format of the I/Q data both conform to a CPRI protocol;
the processor 702 is configured to obtain packet data by parsing the conversion data; and the transceiver 701 is further configured to send the packet data to the second packet handling switching PHS network device by using the second Ethernet interface, and send the I/Q data to the second unit by using the second CPRI port, where
the second PHS network device is a PHS server device, and the second unit is a baseband unit BBU; or the second PHS network device is a PHS client device, and the second unit is a remote radio unit RRU.

In some embodiments of the present invention, the packet data is data to be sent by a first packet handling switching PHS network device to the second PHS network device, and the I/Q data is data to be sent by a first unit to the second unit; and
the first device is configured to receive the packet data from the first PHS network device, receive the I/Q data from the first unit, and after converting the packet data into the conversion data, send the conversion data and the I/Q data to the data transfer device by using the CPRI channel, where
a first Ethernet interface of the first device is connected to the first PHS network device, and a first CPRI port of the first device is connected to the first unit.

In some embodiments of the present invention, when the second PHS network device is a PHS server device, the first PHS network device is a PHS client device, and the first unit is an RRU; or
when the second PHS network device is a PHS client device, the first PHS network device is a PHS server device, and the first unit is a BBU.

In some embodiments of the present invention, the processor 702 is specifically configured to: determine a first transmission resource used to carry the I/Q data and a second transmission resource used to carry the conversion data; and read the I/Q data from the first transmission resource, and read the conversion data from the second transmission resource.

In some embodiments of the present invention, the processor 702 is specifically configured to: determine a first transmission resource, and read the I/Q data from the first transmission resource; determine a transmission resource except the first transmission resource in the transmission resources on the CPRI channel; and determine the transmission resource except the first transmission resource in the transmission resources on the CPRI channel to be a second transmission resource, and read the conversion data from the second transmission resource.

In some embodiments of the present invention, the data transfer device further includes a fourth CPRI port, and two ends of the CPRI channel are separately a third CPRI port of the first device and the fourth CPRI port of the data transfer device; and
the transceiver 701 is specifically configured to: receive, by using the fourth CPRI port of the data transfer device, the conversion data and the I/Q data that are sent by the first device by using the third CPRI port of the first device, where the conversion data and the I/Q data are carried in the transmission resources on the common public radio interface CPRI channel.

As can be learned from the description of the present invention in the foregoing embodiment, after being processed by a first device, packet data from a PHS network device and I/Q data from a BBU (or an RRU) can be carried in transmission resources on a CPRI channel and sent to a second device, and can be provided by the second device for another PHS network device and the RRU (or BBU) respectively. Therefore, the volume of data carried in the transmission resources on the CPRI channel increases, and resource utilization is improved, thereby solving a problem of low transmission bandwidth utilization of a CPRI port.

Referring to FIG. 8, a data transmission system 800 provided in an embodiment of the present invention includes a first device 600 and a second device 700, where the first device 600 is the data transfer device 600 described in FIG. 6, and the second device 700 is the data transfer device 700 described in FIG. 7.

In some embodiments of the present invention, the data transmission system 800 further includes a first unit 801 and a second unit 802, where
the first device is connected to the first unit by using the first CPRI port, and the second device is connected to the second unit by using the second CPRI port;
the first unit is configured to send in-phase/quadrature I/Q data to the first device by using the first CPRI port; and
the second unit is configured to receive, by using the second CPRI port, the I/Q data sent by the second device.

In some embodiments of the present invention, the data transmission system 800 further includes a first PHS network device 803 and a second PHS network device 804, where
the first device is connected to the first PHS network device by using the first Ethernet interface, and the second device is connected to the second PHS network device by using the second Ethernet interface.

As can be learned from the description of the data transmission system in the foregoing embodiment, after being processed by a first device, packet data from a PHS network device and I/Q data from a BBU (or an RRU) can be carried in transmission resources on a CPRI channel and sent to a second device, and can be provided by the second device for another PHS network device and the RRU (or BBU) respectively. Therefore, the volume of data carried in the transmission resources on the CPRI channel increases, and resource utilization is improved, thereby solving a problem of low transmission bandwidth utilization of a CPRI port.

In addition, it should be noted that the described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided in the present invention, connection relationships between modules represent that the modules are in communication connection with one another, and may be specifically implemented as one or more communications buses or signal lines. A person of ordinary skill in the art may understand and implement the embodiments of the present invention without creative efforts.

Based on the foregoing descriptions of the embodiments, a person skilled in the art may clearly understand that the present invention may be implemented by software in addition to necessary universal hardware or by dedicated hardware only, including a dedicated integrated circuit, a dedicated CPU, a dedicated memory, a dedicated component and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, software program implementation is a better implementation manner in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of the present invention.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention, within the scope of the attached claims.

## Claims

1. A data transmission method, comprising:
receiving, by a first device by using a first Ethernet interface, packet data sent by a first packet handling switching, PHS, network device, and receiving, by using a first common public radio interface, CPRI, port, in-phase/quadrature, I/Q, data sent by a first unit, wherein a format of the I/Q data conforms to a CPRI protocol (steps 201, 202);
converting, by the first device, the packet data into conversion data whose format conforms to the CPRI protocol, wherein the conversion is performed by adding of a field to the packet data, wherein the field is encapsulated in order to conform to the CPRI protocol (step 203); and
carrying, by the first device, the conversion data and the I/Q data in transmission resources on a CPRI channel, and sending the conversion data and the I/Q data carried in the transmission resources to a second device, wherein
the first PHS network device is a PHS server device, and the first unit is a baseband unit, BBU; or the first PHS network device is a PHS client device, and the first unit is a remote radio unit, RRU.

2. The method according to claim 1, wherein the packet data is data to be sent by the first packet handling switching PHS network device to a second PHS network device, and the I/Q data is data to be sent by the first unit to a second unit; and
the second device is configured to provide the packet data for the second PHS network device, and provide the I/Q data for the second unit, wherein a second Ethernet interface of the second device is connected to the second PHS network device, and a second CPRI port of the second device is connected to the second unit.

3. The method according to claim 2, wherein when the first PHS network device is a PHS server device, the second PHS network device is a PHS client device, and the second unit is an RRU; or
when the first PHS network device is a PHS client device, the second PHS network device is a PHS server device, and the second unit is a BBU.

4. The method according to any one of claims 1 to 3, wherein the carrying, by the first device, the conversion data and the I/Q data in transmission resources on a CPRI channel comprises:
carrying, by the first device, the I/Q data in the transmission resources on the CPRI channel;
acquiring, by the first device in the transmission resources on the CPRI channel, an idle resource that is not occupied by the I/Q data; and
carrying, by the first device, the conversion data in the idle resource.

5. The method according to any one of claims 1 to 3, wherein the carrying, by the first device, the conversion data and the I/Q data in transmission resources on a CPRI channel comprises:
determining, by the first device in the transmission resources on the CPRI channel, a first transmission resource used to carry the I/Q data and a second transmission resource used to carry the conversion data; and
carrying, by the first device, the I/Q data in the first transmission resource, and carrying the conversion data in the second transmission resource.

6. The method according to any one of claims 1 to 5, wherein two ends of the CPRI channel are separately a third CPRI port of the first device and a fourth CPRI port of the second device, and the sending the conversion data and the I/Q data carried in the transmission resources to a second device comprises:
sending the conversion data and the I/Q data carried in the transmission resources to the fourth CPRI port of the second device by using the third CPRI port of the first device.

7. A data transfer device (600), wherein the data transfer device (600) comprises a transceiver (601) and a processor (602), the data transfer device (600) is connected to a second device (804) by using a common public radio interface, CPRI, channel, the transceiver (601) is connected to a first packet handling switching, PHS, network device (803) by using a first Ethernet interface, and the transceiver (601) is connected to a first unit (801) by using a first CPRI port, wherein
the transceiver (601) is configured to receive, by using the first Ethernet interface, packet data sent by the first PHS network device (803), and receive, by using the first CPRI port, in-phase/quadrature, I/Q, data sent by the first unit (801), wherein a format of the I/Q data conforms to a CPRI protocol;
the processor (602) is configured to convert the packet data into conversion data whose format conforms to the CPRI protocol, wherein the conversion is performed by adding of a field to the packet data, wherein the field is encapsulated in order to conform to the CPRI protocol; and
the processor (602) is further configured to carry the conversion data and the I/Q data in transmission resources on the CPRI channel, and send the conversion data and the I/Q data carried in the transmission resources to the second device (804) by using the transceiver (601), wherein
the first PHS network device (803) is a PHS server device, and the first unit (801) is a baseband unit, BBU; or the first PHS network device (803) is a PHS client device, and the first unit (801) is a remote radio unit, RRU.

8. The device according to claim 7, wherein the packet data is data to be sent by the first PHS network device to a second PHS network device, and the I/Q data is data to be sent by the first unit to a second unit; and
the second device is configured to provide the packet data for the second PHS network device, and provide the I/Q data for the second unit, wherein a second Ethernet interface of the second device is connected to the second PHS network device, and a second CPRI port of the second device is connected to the second unit.

9. The device according to claim 7 or 8, wherein the processor is specifically configured to: carry the I/Q data in the transmission resources on the CPRI channel; acquire, in the transmission resources on the CPRI channel, an idle resource that is not occupied by the I/Q data; and carry the conversion data in the idle resource.

10. The device according to claim 7 or 8, wherein the processor is specifically configured to: determine, in the transmission resources on the CPRI channel, a first transmission resource used to carry the I/Q data and a second transmission resource used to carry the conversion data; and carry the I/Q data in the first transmission resource, and carry the conversion data in the second transmission resource.

11. The device according to any one of claims 7 to 10, wherein the data transfer device further comprises a third CPRI port, and two ends of the CPRI channel are separately the third CPRI port of the data transfer device and a fourth CPRI port of the second device; and
the transceiver is specifically configured to send the conversion data and the I/Q data carried in the transmission resources to the fourth CPRI port of the second device by using the third CPRI port of the data transfer device.

12. A data transfer device (700), wherein the data transfer device (700) comprises a transceiver (701) and a processor (702), the data transfer device (700) is connected to a first device (600) by using a common public radio interface, CPRI, channel, the transceiver (701) is connected to a second packet handling switching, PHS, network device (804) by using a second Ethernet interface, and the transceiver (701) is connected to a second unit (802) by using a second CPRI port, wherein
the transceiver (701) is configured to receive, from the first device (600), conversion data and in-phase/quadrature, I/Q, data that are carried in transmission resources on a common public radio interface CPRI channel, wherein a format of the conversion data and a format of the I/Q data both conform to a CPRI protocol, wherein the conversion data contain packet data together with a field added to the packet data, wherein the field is encapsulated in order to conform to the CPRI protocol;
the processor (702) is configured to obtain packet data by parsing the conversion data; and
the transceiver (701) is further configured to send the packet data to the second packet handling switching PHS network device by using the second Ethernet interface, and send the I/Q data to the second unit (802) by using the second CPRI port, wherein
the second PHS network device (804) is a PHS server device, and the second unit (802) is a baseband unit, BBU; or the second PHS network device (804) is a PHS client device, and the second unit (802) is a remote radio unit, RRU.

13. The device according to claim 12, wherein the packet data is data to be sent by a first packet handling switching PHS network device to the second PHS network device, and the I/Q data is data to be sent by a first unit to the second unit; and
the first device is configured to receive the packet data from the first PHS network device, receive the I/Q data from the first unit, and after converting the packet data into the conversion data, send the conversion data and the I/Q data to the data transfer device by using the CPRI channel, wherein
a first Ethernet interface of the first device is connected to the first PHS network device, and a first CPRI port of the first device is connected to the first unit.

14. The device according to claim 12 or 13, wherein the processor is specifically configured to: determine a first transmission resource used to carry the I/Q data and a second transmission resource used to carry the conversion data; and read the I/Q data from the first transmission resource, and read the conversion data from the second transmission resource.

15. The device according to claim 12 or 13, wherein the processor is specifically configured to: determine a first transmission resource, and read the I/Q data from the first transmission resource; determine a transmission resource except the first transmission resource in the transmission resources on the CPRI channel; and determine the transmission resource except the first transmission resource in the transmission resources on the CPRI channel to be the second transmission resource, and read the conversion data from the second transmission resource.

## Patentansprüche

1. Datenübertragungsverfahren, das Folgendes umfasst:
Empfangen durch eine erste Vorrichtung durch Verwenden einer ersten Ethernetschnittstelle von Paketdaten, die von einer ersten Netzwerkvorrichtung für die Pakethandhabungsvermittlung, PHS, gesendet werden, und Empfangen durch Verwenden eines ersten gemeinsamen öffentlichen Funkschnittstellen(CPRI)-Anschlusses von Inphase/Quadratur(I/Q)-Daten, die von einer ersten Einheit gesendet werden, wobei ein Format der I/Q-Daten mit einem CPRI-Protokoll übereinstimmt (Schritte 201, 202);
Konvertieren durch die erste Vorrichtung der Paketdaten in Konvertierungsdaten, deren Format mit dem CPRI-Protokoll übereinstimmt, wobei die Konvertierung durch Hinzufügen eines Feldes zu den Paketdaten durchgeführt wird, wobei das Feld gekapselt ist, um mit dem CPRI-Protokoll übereinzustimmen (Schritt 203); und
Transportieren der Konvertierungsdaten und der I/Q-Daten in Übertragungsressourcen durch die erste Vorrichtung auf einem CPRI-Kanal und Senden der Konvertierungsdaten und der I/Q-Daten, die in den Übertragungsressourcen transportiert werden, an eine zweite Vorrichtung, wobei die erste PHS-Netzwerkvorrichtung eine PHS-Servervorrichtung und die erste Einheit eine Basisbandeinheit, BBU, ist oder die erste PHS-Netzwerkvorrichtung eine PHS-Clientvorrichtung und die erste Einheit eine entfernte Funkeinheit, RRU, ist.

2. Verfahren nach Anspruch 1, wobei die Paketdaten Daten sind, die von der ersten Netzwerkvorrichtung für die Pakethandhabungsvermittlung PHS an eine zweite PHS-Netzwerkvorrichtung zu senden sind, und die I/Q-Daten Daten sind, die von der ersten Einheit an eine zweite Einheit zu senden sind; und
die zweite Vorrichtung dazu ausgelegt ist, die Paketdaten für die zweite PHS-Netzwerkvorrichtung bereitzustellen und die I/Q-Daten für die zweite Einheit bereitzustellen, wobei eine zweite Ethernetschnittstelle der zweiten Vorrichtung mit der zweiten PHS-Netzwerkvorrichtung verbunden ist und ein zweiter CPRI-Anschluss der zweiten Vorrichtung mit der zweiten Einheit verbunden ist.

3. Verfahren nach Anspruch 2, wobei, wenn die erste PHS-Netzwerkvorrichtung eine PHS-Servervorrichtung ist, die zweite PHS-Netzwerkvorrichtung eine PHS-Clientvorrichtung und die zweite Einheit eine RRU ist; oder
wenn die erste PHS-Netzwerkvorrichtung eine PHS-Clientvorrichtung ist, die zweite PHS-Netzwerkvorrichtung eine PHS-Servervorrichtung und die zweite Einheit eine BBU ist.

4. Verfahren nach einem der Ansprüche 1 bis 3, wobei das Transportieren der Konvertierungsdaten und der I/Q-Daten in Übertragungsressourcen auf einem CPRI-Kanal durch die erste Vorrichtung Folgendes umfasst:
Transportieren der I/Q-Daten in den Übertragungsressourcen auf dem CPRI-Kanal durch die erste Vorrichtung;
Erfassen in den Übertragungsressourcen auf dem CPRI-Kanal einer freien Ressource, die nicht durch die I/Q-Daten belegt ist, durch die erste Vorrichtung und
Transportieren der Konvertierungsdaten in der freien Ressource durch die erste Vorrichtung.

5. Verfahren nach einem der Ansprüche 1 bis 3, wobei das Transportieren der Konvertierungsdaten und der I/Q-Daten in Übertragungsressourcen auf einem CPRI-Kanal durch die erste Vorrichtung Folgendes umfasst:
Bestimmen durch die erste Vorrichtung in den Übertragungsressourcen auf dem CPRI-Kanal einer ersten Übertragungsressource, die verwendet wird, um die I/Q-Daten zu transportieren, und einer zweiten Übertragungsressource, die verwendet wird, um die Konvertierungsdaten zu transportieren; und
Transportieren durch die erste Vorrichtung der I/Q-Daten in der ersten Übertragungsressource und Transportieren der Konvertierungsdaten in der zweiten Übertragungsressource.

6. Verfahren nach einem der Ansprüche 1 bis 5, wobei zwei Enden des CPRI-Kanals separat ein dritter CPRI-Anschluss der ersten Vorrichtung und ein vierter CPRI-Anschluss der zweiten Vorrichtung sind und das Senden der Konvertierungsdaten und der I/Q-Daten, die in den Übertragungsressourcen transportiert werden, an eine zweite Vorrichtung Folgendes umfasst:
Senden der Konvertierungsdaten und der I/Q-Daten, die in den Übertragungsressourcen transportiert werden, an den vierten CPRI-Anschluss der zweiten Vorrichtung durch Verwenden des dritten CPRI-Anschlusses der ersten Vorrichtung.

7. Datentransfervorrichtung (600), wobei die Datentransfervorrichtung (600) einen Sendeempfänger (601) und einen Prozessor (602) umfasst, die Datentransfervorrichtung (600) durch Verwenden eines gemeinsamen öffentlichen Funkschnittstellen(CPRI)-Kanals mit einer zweiten Vorrichtung (804) verbunden ist, der Sendeempfänger (601) durch Verwenden einer ersten Ethernetschnittstelle mit einer ersten Netzwerkvorrichtung (803) für die Pakethandhabungsvermittlung, PHS, verbunden ist und der Sendeempfänger (601) durch Verwenden eines ersten CPRI-Anschlusses mit einer ersten Einheit (801) verbunden ist, wobei
der Sendeempfänger (601) dazu ausgelegt ist, durch Verwenden der ersten Ethernetschnittstelle Paketdaten, die von der ersten PHS-Netzwerkvorrichtung (803) gesendet werden, zu empfangen und durch Verwenden des ersten CPRI-Anschlusses Inphase/Quadratur(I/Q)-Daten, die von der ersten Einheit (801) gesendet werden, zu empfangen, wobei ein Format der I/Q-Daten mit einem CPRI-Protokoll übereinstimmt;
der Prozessor (602) dazu ausgelegt ist, die Paketdaten in Konvertierungsdaten zu konvertieren, deren Format mit dem CPRI-Protokoll übereinstimmt, wobei die Konvertierung durch Hinzufügen eines Feldes zu den Paketdaten durchgeführt wird, wobei das Feld gekapselt ist, um mit dem CPRI-Protokoll übereinzustimmen; und der Prozessor (602) ferner dazu ausgelegt ist, die Konvertierungsdaten und die I/Q-Daten in Übertragungsressourcen auf dem CPRI-Kanal zu transportieren und die Konvertierungsdaten und die I/Q-Daten, die in den Übertragungsressourcen transportiert werden, durch Verwenden des Sendeempfängers (601) an die zweite Vorrichtung (804) zu senden, wobei
die erste PHS-Netzwerkvorrichtung (803) eine PHS-Servervorrichtung und die erste Einheit (801) eine Basisbandeinheit, BBU, ist oder die erste PHS-Netzwerkvorrichtung (803) eine PHS-Clientvorrichtung und die erste Einheit (801) eine entfernte Funkeinheit, RRU, ist.

8. Vorrichtung nach Anspruch 7, wobei die Paketdaten Daten sind, die von der ersten PHS-Netzwerkvorrichtung an eine zweite PHS-Netzwerkvorrichtung zu senden sind, und die I/Q-Daten Daten sind, die von der ersten Einheit an eine zweite Einheit zu senden sind; und
die zweite Vorrichtung dazu ausgelegt ist, die Paketdaten für die zweite PHS-Netzwerkvorrichtung bereitzustellen und die I/Q-Daten für die zweite Einheit bereitzustellen, wobei eine zweite Ethernetschnittstelle der zweiten Vorrichtung mit der zweiten PHS-Netzwerkvorrichtung verbunden ist und ein zweiter CPRI-Anschluss der zweiten Vorrichtung mit der zweiten Einheit verbunden ist.

9. Vorrichtung nach Anspruch 7 oder 8, wobei der Prozessor speziell zu Folgendem ausgelegt ist: Transportieren der I/Q-Daten in den Übertragungsressourcen auf dem CPRI-Kanal; Erfassen in den Übertragungsressourcen auf dem CPRI-Kanal einer freien Ressource, die nicht durch die I/Q-Daten belegt ist; und Transportieren der Konvertierungsdaten in der freien Ressource.

10. Vorrichtung nach Anspruch 7 oder 8, wobei der Prozessor speziell zu Folgendem ausgelegt ist: Bestimmen in den Übertragungsressourcen auf dem CPRI-Kanal einer ersten Übertragungsressource, die verwendet wird, um die I/Q-Daten zu transportieren, und einer zweiten Übertragungsressource, die verwendet wird, um die Konvertierungsdaten zu transportieren; und Transportieren der I/Q-Daten in der ersten Übertragungsressource und Transportieren der Konvertierungsdaten in der zweiten Übertragungsressource.

11. Verfahren nach einem der Ansprüche 7 bis 10, wobei die Datentransfervorrichtung ferner einen dritten CPRI-Anschluss umfasst und zwei Enden des CPRI-Kanals separat der dritte CPRI-Anschluss der Datentransfervorrichtung und ein vierter CPRI-Anschluss der zweiten Vorrichtung sind; und
der Sendeempfänger speziell dazu ausgelegt ist, durch Verwenden des dritten CPRI-Anschlusses der Datentransfervorrichtung die Konvertierungsdaten und die I/Q-Daten, die in den Übertragungsressourcen transportiert werden, an den vierten CPRI-Anschluss der zweiten Vorrichtung zu senden.

12. Datentransfervorrichtung (700), wobei die Datentransfervorrichtung (700) einen Sendeempfänger (701) und einen Prozessor (702) umfasst, die Datentransfervorrichtung (700) durch Verwenden eines gemeinsamen öffentlichen Funkschnittstellen(CPRI)-Kanals mit einer ersten Vorrichtung (600) verbunden ist, der Sendeempfänger (701) durch Verwenden einer zweiten Ethernetschnittstelle mit einer zweiten Netzwerkvorrichtung (804) für die Pakethandhabungsvermittlung, PHS, verbunden ist und der Sendeempfänger (701) durch Verwenden eines zweiten CPRI-Anschlusses mit einer zweiten Einheit (802) verbunden ist, wobei
der Sendeempfänger (701) dazu ausgelegt ist, von der ersten Vorrichtung (600) Konvertierungsdaten und Inphase/Quadratur(I/Q)-Daten, die in Übertragungsressourcen auf einem gemeinsamen öffentlichen Funkschnittstellen(CPRI)-Kanal transportiert werden, zu empfangen, wobei ein Format der Konvertierungsdaten und ein Format der I/Q-Daten beide mit einem CPRI-Protokoll übereinstimmen, wobei die Konvertierungsdaten Paketdaten zusammen mit einem Feld, das zu den Paketdaten hinzugefügt wurde, enthalten, wobei das Feld gekapselt ist, um mit dem CPRI-Protokoll übereinzustimmen;
der Prozessor (702) dazu ausgelegt ist, durch Parsen der Konvertierungsdaten Paketdaten zu erhalten; und
der Sendeempfänger (701) ferner dazu ausgelegt ist, durch Verwenden der zweiten Ethernetschnittstelle die Paketdaten an die zweite Netzwerkvorrichtung für die Pakethandhabungsvermittlung PHS zu senden und die I/Q-Daten durch Verwenden des zweiten CPRI-Anschlusses an die zweite Einheit (802) zu senden, wobei die zweite PHS-Netzwerkvorrichtung (804) eine PHS-Servervorrichtung und die zweite Einheit (802) eine Basisbandeinheit, BBU, ist oder die zweite PHS-Netzwerkvorrichtung (804) eine PHS-Clientvorrichtung und die zweite Einheit (802) eine entfernte Funkeinheit, RRU, ist.

13. Vorrichtung nach Anspruch 12, wobei die Paketdaten Daten sind, die von einer ersten Netzwerkvorrichtung für die Pakethandhabungsvermittlung PHS an die zweite PHS-Netzwerkvorrichtung zu senden sind, und die I/Q-Daten Daten sind, die von einer ersten Einheit an die zweite Einheit zu senden sind; und
die erste Vorrichtung dazu ausgelegt ist, die Paketdaten von der ersten PHS-Netzwerkvorrichtung zu empfangen, die I/Q-Daten von der ersten Einheit zu empfangen und nach dem Konvertieren der Paketdaten in die Konvertierungsdaten die Konvertierungsdaten und die I/Q-Daten durch Verwenden des CPRI-Kanals an die Datentransfervorrichtung zu senden, wobei
eine erste Ethernetschnittstelle der ersten Vorrichtung mit der ersten PHS-Netzwerkvorrichtung verbunden ist und ein erster CPRI-Anschluss der ersten Vorrichtung mit der ersten Einheit verbunden ist.

14. Vorrichtung nach Anspruch 12 oder 13, wobei der Prozessor speziell zu Folgendem ausgelegt ist: Bestimmen einer ersten Übertragungsressource, die verwendet wird, um die I/Q-Daten zu transportieren, und einer zweiten Übertragungsressource, die verwendet wird, um die Konvertierungsdaten zu transportieren; und Auslesen der I/Q-Daten aus der ersten Übertragungsressource und Auslesen der Konvertierungsdaten aus der zweiten Übertragungsressource.

15. Vorrichtung nach Anspruch 12 oder 13, wobei der Prozessor speziell zu Folgendem ausgelegt ist: Bestimmen einer ersten Übertragungsressource und Auslesen der I/Q-Daten aus der ersten Übertragungsressource; Bestimmen einer Übertragungsressource außer der ersten Übertragungsressource in den Übertragungsressourcen auf dem CPRI-Kanal und Bestimmen der Übertragungsressource außer der ersten Übertragungsressource in den Übertragungsressourcen auf dem CPRI-Kanal zur zweiten Übertragungsressource und Auslesen der Konvertierungsdaten aus der zweiten Übertragungsressource.

## Revendications

1. Procédé d'émission de données, consistant à :
recevoir, par un premier dispositif au moyen d'une première interface Ethernet, des données de paquet envoyées par un premier dispositif de réseau à commutation par traitement de paquets, PHS, et recevoir, au moyen d'un premier port à interface radio publique commune, CPRI, des données en phase/en quadrature, I/Q, envoyées par une première unité, un format des données I/Q se conformant à un protocole CPRI (étapes 201, 202) ;
convertir, par le premier dispositif, les données de paquets en données de conversion dont le format se conforme au protocole CPRI, la conversion étant réalisée en ajoutant un champ aux données de paquet, le champ étant encapsulé afin de se conformer au protocole CPRI (étape 203) ; et
transporter, par le premier dispositif, les données de conversion et les données I/Q dans des ressources d'émission sur un canal CPRI, et envoyer les données de conversion et les données I/Q transportées dans les ressources d'émission à un second dispositif,
le premier dispositif de réseau PHS étant un dispositif serveur PHS, et la première unité étant une unité en bande de base, BBU ; ou le premier dispositif de réseau PHS étant un dispositif client PHS, et la première unité étant une unité radio distante, RRU.

2. Procédé selon la revendication 1, dans lequel les données de paquet sont des données qui doivent être envoyées par le premier dispositif de réseau à commutation par traitement de paquets, PHS à un second dispositif de réseau PHS, et les données I/Q sont des données qui doivent être envoyées par la première unité à une seconde unité ; et
le second dispositif est conçu pour fournir les données de paquet au second dispositif de réseau PHS, et fournir les données I/Q à la seconde unité, une seconde interface Ethernet du second dispositif étant connectée au second dispositif de réseau PHS, et un deuxième port CPRI du second dispositif étant connecté à la seconde unité.

3. Procédé selon la revendication 2, dans lequel, quand le premier dispositif de réseau PHS est un dispositif serveur PHS, le second dispositif de réseau PHS est un dispositif client PHS, et la seconde unité est une RRU ; ou
quand le premier dispositif de réseau PHS est un dispositif client PHS, le second dispositif de réseau PHS est un dispositif serveur PHS, et la seconde unité est une BBU.

4. Procédé selon l'une quelconque des revendications 1 à 3, dans lequel le transport, par le premier dispositif, des données de conversion et des données I/Q dans des ressources d'émission sur un canal CPRI consiste à :
transporter, par le premier dispositif, les données I/Q dans les ressources d'émission sur le canal CPRI ;
acquérir, par le premier dispositif dans les ressources d'émission sur le canal CPRI, une ressource inactive qui n'est pas occupée par les données I/Q ; et
transporter, par le premier dispositif, les données de conversion dans la ressource inactive.

5. Procédé selon l'une quelconque des revendications 1 à 3, dans lequel le transport, par le premier dispositif, des données de conversion et des données I/Q dans des ressources d'émission sur un canal CPRI consiste à :
déterminer, par le premier dispositif dans les ressources d'émission sur le canal CPRI, une première ressource d'émission utilisée pour transporter les données I/Q et une seconde ressource d'émission utilisée pour transporter les données de conversion ; et
transporter, par le premier dispositif, les données I/Q dans la première ressource d'émission, et transporter les données de conversion dans la seconde ressource d'émission.

6. Procédé selon l'une quelconque des revendications 1 à 5, dans lequel deux extrémités du canal CPRI sont séparément un troisième port CPRI du premier dispositif et un quatrième port CPRI du second dispositif, et l'envoi à un second dispositif des données de conversion et des données I/Q transportées dans les ressources d'émission consiste à :
envoyer les données de conversion et les données I/Q transportées dans les ressources d'émission au quatrième port CPRI du second dispositif au moyen du troisième port CPRI du premier dispositif.

7. Dispositif de transfert de données (600), le dispositif de transfert de données (600) comprenant un émetteur-récepteur (601) et un processeur (602), le dispositif de transfert de données (600) étant connecté à un second dispositif (804) au moyen d'un canal à interface radio publique commune, CPRI, l'émetteur-récepteur (601) étant connecté à un premier dispositif de réseau à commutation par traitement de paquets, PHS (803) au moyen d'une première interface Ethernet, et l'émetteur-récepteur (601) étant connecté à une première unité (801) au moyen d'un premier port CPRI, l'émetteur-récepteur (601) étant conçu pour recevoir, au moyen de la première interface Ethernet, des données de paquet envoyées par le premier dispositif de réseau PHS (803), et recevoir, au moyen du premier port CPRI, des données en phase/en quadrature (I/Q) envoyées par la première unité (801), un format des données I/Q se conformant à un protocole CPRI ;
le processeur (602) étant conçu pour convertir les données de paquets en données de conversion dont le format se conforme au protocole CPRI, la conversion étant réalisée en ajoutant un champ aux données de paquet, le champ étant encapsulé afin de se conformer au protocole CPRI ; et
le processeur (602) étant en outre conçu pour transporter les données de conversion et les données I/Q dans des ressources d'émission sur le canal CPRI, et envoyer les données de conversion et les données I/Q transportées dans les ressources d'émission au second dispositif (804) au moyen de l'émetteur-récepteur (601),
le premier dispositif de réseau PHS (803) étant un dispositif serveur PHS, et la première unité (801) étant une unité en bande de base, BBU ; ou le premier dispositif de réseau PHS (803) étant un dispositif client PHS, et la première unité (801) étant une unité radio distante, RRU.

8. Dispositif selon la revendication 7, dans lequel les données de paquet sont des données qui doivent être envoyées par le premier dispositif de réseau PHS à un second dispositif de réseau PHS, et les données I/Q sont des données qui doivent être envoyées par la première unité à une seconde unité ; et
le second dispositif est conçu pour fournir les données de paquet au second dispositif de réseau PHS, et fournir les données I/Q à la seconde unité, une seconde interface Ethernet du second dispositif étant connectée au second dispositif de réseau PHS, et un deuxième port CPRI du second dispositif étant connecté à la seconde unité.

9. Dispositif selon la revendication 7 ou 8, dans lequel le processeur est spécifiquement conçu pour : transporter les données I/Q dans les ressources d'émission sur le canal CPRI ; acquérir, dans les ressources d'émission sur le canal CPRI, une ressource inactive qui n'est pas occupée par les données I/Q ; et transporter les données de conversion dans la ressource inactive.

10. Dispositif selon la revendication 7 ou 8, dans lequel le processeur est spécifiquement conçu pour : déterminer, dans les ressources d'émission sur le canal CPRI, une première ressource d'émission utilisée pour transporter les données I/Q et une seconde ressource d'émission utilisée pour transporter les données de conversion ; et transporter les données I/Q dans la première ressource d'émission, et transporter les données de conversion dans la seconde ressource d'émission.

11. Dispositif selon l'une quelconque des revendications 7 à 10, dans lequel le dispositif de transfert de données comprend en outre un troisième port CPRI, et deux extrémités du canal CPRI sont séparément le troisième port CPRI du dispositif de transfert de données et un quatrième port CPRI du second dispositif ; et l'émetteur-récepteur est spécifiquement conçu pour envoyer les données de conversion et les données I/Q transportées dans les ressources d'émission au quatrième port CPRI du second dispositif au moyen du troisième port CPRI du dispositif de transfert de données.

12. Dispositif de transfert de données (700), le dispositif de transfert de données (700) comprenant un émetteur-récepteur (701) et un processeur (702), le dispositif de transfert de données (700) étant connecté à un premier dispositif (600) au moyen d'un canal à interface radio publique commune, CPRI, l'émetteur-récepteur (701) étant connecté à un second dispositif de réseau à commutation par traitement de paquets, PHS, (804) au moyen d'une seconde interface Ethernet, et l'émetteur-récepteur (701) étant connecté à une seconde unité (802) au moyen d'un deuxième port CPRI,
l'émetteur-récepteur (701) étant conçu pour recevoir, en provenance du premier dispositif (600), des données de conversion et des données en phase/en quadrature, I/Q, qui sont transportées dans des ressources d'émission sur un canal à interface radio publique commune, CPRI, un format des données de conversion et un format des données I/Q se conformant tous deux à un protocole CPRI, les données de conversion contenant des données de paquet conjointement avec un champ ajouté aux données de paquet, le champ étant encapsulé afin de se conformer au protocole CPRI;
le processeur (702) étant conçu pour obtenir des données de paquet en analysant les données de conversion ; et
l'émetteur-récepteur (701) étant en outre conçu pour envoyer les données de paquet au second dispositif de réseau à commutation par traitement de paquets, PHS, au moyen de la seconde interface Ethernet, et envoyer les données I/Q à la seconde unité (802) au moyen du second port CPRI,
le second dispositif de réseau PHS (804) étant un dispositif serveur PHS, et la seconde unité (802) étant une unité en bande de base, BBU ; ou le second dispositif de réseau PHS (804) étant un dispositif client PHS, et la seconde unité (802) étant une unité radio distante, RRU.

13. Dispositif selon la revendication 12, dans lequel les données de paquet sont des données qui doivent être envoyées par un premier dispositif de réseau à commutation par traitement de paquets, PHS, au second dispositif de réseau PHS, et les données I/Q sont des données qui doivent être envoyées par une première unité à la seconde unité ; et
le premier dispositif est conçu pour recevoir les données de paquet en provenance du premier dispositif de réseau PHS, recevoir les données I/Q en provenance de la première unité, et après la conversion des données de paquet en données de conversion, envoyer les données de conversion et les données I/Q au dispositif de transfert de données au moyen du canal CPRI,
une première interface Ethernet du premier dispositif étant connectée au premier dispositif de réseau PHS, et un premier port CPRI du premier dispositif étant connecté à la première unité.

14. Dispositif selon la revendication 12 ou 13, dans lequel le processeur est spécifiquement conçu pour : déterminer une première ressource d'émission utilisée pour transporter les données I/Q et une seconde ressource d'émission utilisée pour transporter les données de conversion ; et lire les données I/Q à partir de la première ressource d'émission, et lire les données de conversion à partir de la seconde ressource d'émission.

15. Dispositif selon la revendication 12 ou 13, dans lequel le processeur est spécifiquement conçu pour : déterminer une première ressource d'émission, et lire les données I/Q à partir de la première ressource d'émission ; déterminer une ressource d'émission, à l'exception de la première ressource d'émission, parmi les ressources d'émission sur le canal CPRI ; et déterminer la ressource d'émission, à l'exception de la première ressource d'émission, parmi les ressources d'émission sur le canal CPRI en tant que seconde ressource d'émission, et lire les données de conversion à partir de la seconde ressource d'émission.
